(19) **Europäisches Patentamt European Patent Office Office européen des brevets**

(11) **EP 4 576 613 B1**

(12) **FASCICULE DE BREVET EUROPEEN**

(45) Date de publication et mention de la délivrance du brevet:
**15.07.2026 Bulletin 2026/29**

(21) Numéro de dépôt: **24222089.5**

(22) Date de dépôt: **20.12.2024**

(51) Classification Internationale des Brevets (IPC):
***H04B 10/70*** *(2013.01)*

(52) Classification Coopérative des Brevets (CPC):
**H04B 10/70**

(54) **SYSTÈME DE DISTRIBUTION QUANTIQUE DE CLÉS UTILISANT UNE CORRECTION DE LA POLARISATION DE PHOTONS**

QUANTENSCHLÜSSELVERTEILUNGSSYSTEM MIT PHOTONENPOLARISATIONSKORREKTUR

QUANTUM KEY DISTRIBUTION SYSTEM USING PHOTON POLARIZATION CORRECTION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.12.2023 FR 2314815**

(43) Date de publication de la demande:
**25.06.2025 Bulletin 2025/26**

(73) Titulaire: **THALES**
**92190 Meudon (FR)**

(72) Inventeurs:
• **AYMERIC, Raphaël**
**31037 TOULOUSE Cedex 1 (FR)**
• **SOTOM, Michel**
**31037 TOULOUSE Cedex 1 (FR)**
• **BERTRAND, Mathieu**
**31037 TOULOUSE Cedex 1 (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**CN-U- 208 433 978    US-B2- 8 265 279**

## Description

### Domaine technique

La présente invention concerne de manière générale les télécommunications quantiques, et en particulier un émetteur pour transmettre un signal multiplexé comprenant un signal quantique, un récepteur pour recevoir un signal multiplexé comprenant un signal quantique, et un système comprenant un tel émetteur et récepteur et les procédés associés mis en œuvre.

L'application principale des systèmes de télécommunication quantiques actuels est d'utiliser la théorie de l'information quantique pour distribuer une clé cryptographique (ou clé de cryptage) entre deux dispositifs de télécommunications (c'est-à-dire deux utilisateurs) distants, via des protocoles quantiques spécifiques, dans le but de chiffrer ultérieurement et de manière ultra sécurisée les communications entre ces deux dispositifs. De tels protocoles quantiques sont généralement désignés par l'acronyme QKD, signifiant 'distribution quantique de clés' en français selon l'expression anglo-saxonne correspondante 'Quantum Key Distribution'. Les clés obtenues à partir d'un protocole QKD sont des clés cryptographiques secrètes ayant un degré de sécurité supérieur aux clés obtenues par des protocoles classiques.

Dans le domaine de la cryptographie quantique, les utilisateurs distants d'un système de communication quantique sont classiquement nommés Alice (dispositif émetteur) et Bob (dispositif récepteur). Un protocole QKD comporte une étape d'émission d'information encodée sur des particules quantiques, une étape de réception de ces particules et une étape de réconciliation entre l'émetteur et le récepteur.

L'étape d'émission consiste à encoder de l'information classique (0 ou 1) sur une variable d'encodage des particules quantiques (appelé aussi « qubits »), correspondant généralement à des photons. Une variable d'encodage d'un qubit correspond à un degré de liberté de la particule quantique et peut être la polarisation du photon. L'étape de réception consiste à déterminer l'état des photons reçus suivant la variable d'encodage choisie pour récupérer l'information classique encodée. Dans l'étape de réconciliation, le dispositif émetteur et le dispositif récepteur communiquent pour corriger les erreurs de transmission potentielles et générer une clé brute partagée. Ces dispositifs, émetteur et récepteur, transforment ainsi respectivement l'information encodée et l'information déterminée (correspondant à leur clé brute respective), en une clé ultra sécurisée permettant une amplification de confidentialité dans leurs échanges par télécommunications.

Un tel type de protocole QKD de distribution quantique de clés utilisant la polarisation de particules quantiques comme variable d'encodage requière un encodage, à l'émission, et une mesure, à la réception, des qubits dans au moins deux bases de polarisation différentes et non-orthogonales.

Cependant, l'état de polarisation des particules quantiques entre leur émission et leur réception (c'est-à-dire au cours de leur propagation) subit des rotations aléatoires. Celles-ci peuvent être dues à la biréfringence des divers milieux traversés ou encore au déplacement du dispositif émetteur par rapport au dispositif récepteur, tel que le déplacement d'un satellite (émetteur ou récepteur) par rapport à une station sol dans le cas de communications via un segment spatial.

Pour éviter de telles rotations aléatoires d'état de polarisation, certains systèmes connus de partage de clé quantique utilisent une propagation uniquement en espace libre dans laquelle la polarisation de photons est stable, au cours de leur propagation à travers un canal de transmission. Cependant, dans certaines applications, il est nécessaire d'utiliser une transmission en optique guidée, en tant que canal de transmission, par exemple pour une propagation sur un réseau sol ou à bord d'un satellite pour assouplir les contraintes de construction de la charge utile.

Pour compenser (ou corriger) les rotations aléatoires d'état de polarisation, certains systèmes connus utilisent, en début de protocole QKD, une référence unique de polarisation qui permet d'estimer initialement les rotations de polarisation induites lors de la propagation et d'aligner la polarisation des photons transmis avec les bases de mesures en réception. Cependant cette référence unique ne permet pas de corriger les nouvelles rotations de polarisation après la phase initiale d'estimation. Alternativement, d'autres systèmes existants utilisent plutôt une génération périodique de signaux de références des bases d'encodage à partir de la source de signaux quantiques et donc multiplexés temporellement avec les qubits, ce qui réduit le débit utile du système.

Il existe ainsi un besoin pour un système de distribution quantique de clés amélioré et capable de corriger en temps réel les rotations des états de polarisation servant à l'encodage et au décodage des qubits.

Il est aussi à noter que le document de brevet US8,265,279 B2 décrit un émetteur configuré pour transmettre un signal à travers un canal de transmission, ledit émetteur comprenant un générateur de signaux et un encodeur en polarisation comprenant une pluralité de N voies optiques ainsi qu'un sélectionneur optique et un recombineur optique.

De plus, le document CN208433978U décrit la transmission d'un signal de contrôle de polarisation multiplexé avec un signal quantique, afin de permettre une boucle de rétroaction d'ajustement de la polarisation du côté du récepteur,

### Résumé de l'invention

A cet effet, il est proposé un émetteur configuré pour transmettre un signal multiplexé à travers un canal de transmission. L'émetteur comprend :

- un générateur de signaux configuré pour générer un signal quantique initial, un premier signal de référence et un deuxième signal de référence,
- un encodeur en polarisation comprenant une pluralité de N voies optiques, l'encodeur en polarisation comprenant en outre :

  - un sélectionneur optique configuré pour sélectionner une des voies optiques et pour diriger le signal quantique initial généré vers la voie optique sélectionnée,
  - un recombineur optique configuré pour générer le signal multiplexé, le signal multiplexé comprenant un premier signal de contrôle d'une première valeur d'encodage en polarisation, un deuxième signal de contrôle d'une deuxième valeur d'encodage en polarisation, et un signal quantique encodé sur une valeur d'encodage en polarisation choisie parmi un ensemble de valeurs comprenant au moins la première valeur d'encodage en polarisation et la deuxième valeur d'encodage en polarisation, le signal quantique encodé étant déterminé à partir du signal quantique initial délivré par la voie optique sélectionnée par le sélectionneur optique.

Les voies optiques comprennent une première voie optique comprenant une première unité d'intégration configurée pour intégrer le premier signal de référence dans la première voie optique et une deuxième voie optique comprenant une deuxième unité d'intégration configurée pour intégrer le deuxième signal de référence dans la deuxième voie optique, le premier signal de contrôle étant déterminé à partir du premier signal de référence délivré par la première voie optique au recombineur optique, et le deuxième signal de contrôle étant déterminé à partir du deuxième signal de référence délivré par la deuxième voie optique au recombineur optique.

Dans des modes de réalisation, chaque voie optique de l'encodeur en polarisation peut être associée à une valeur d'encodage en polarisation de l'ensemble de valeurs, et au moins une des voies optiques peut comprendre en outre un élément optique configuré pour modifier la polarisation d'un signal optique parcourant la voie optique selon la valeur d'encodage associée.

Dans un mode de réalisation, l'émetteur peut être un dispositif tout-optique guidée, les voies optiques de l'encodeur en polarisation étant formées à partir de fibres à maintien de polarisation et/ou de guides d'onde intégrés.

La présente invention propose de plus un récepteur configuré pour recevoir un signal multiplexé à travers un canal de transmission, le signal multiplexé comprenant un signal quantique encodé, un premier signal de contrôle d'une première valeur d'encodage en polarisation et un deuxième signal de contrôle d'une deuxième valeur d'encodage en polarisation. Le récepteur comprend un séparateur de faisceaux configuré pour séparer le signal multiplexé en deux composantes de signal comprenant une composante du premier signal de contrôle et une composante du deuxième signal de contrôle, chaque composante de signal parcourant respectivement une chaîne de traitement associée à une base de polarisation composée d'au moins un état en polarisation, une des composantes de signal comprenant en outre le signal quantique encodé.

Chaque chaîne de traitement comprend un dispositif de correction adapté pour déterminer l'état de polarisation d'un signal intégré de contrôle de la composante de signal parcourant la chaîne, le dispositif de correction étant en outre adapté pour modifier la polarisation de la composante de signal de manière à aligner l'état de polarisation déterminé par rapport à un des au moins un état en polarisation de la base associée, chaque chaîne de traitement comprenant un module de détection adapté pour mesurer le signal quantique encodé selon au moins un des au moins un état en polarisation de la base associée.

Dans des modes de réalisation, pour chaque chaîne de traitement, le dispositif de correction peut être configuré pour démultiplexer la composante de signal pour sélectionner l'une des composantes de signal de contrôle et l'acheminer vers un dispositif d'analyse de polarisation comprenant au moins une unité de détection et adapté pour détecter la composante sélectionnée de signal intégré de contrôle selon un des au moins un état en polarisation de la base associée.

Selon certains aspects, pour chaque chaîne de traitement, le dispositif de correction peut comprendre en outre un processeur configuré pour analyser l'état de polarisation déterminé et pour générer un signal d'asservissement appliqué à un module de correction de polarisation de la composante de signal.

Dans des modes de réalisation, le séparateur de faisceaux peut être un coupleur optique symétrique en Y fibré de type 50/50, et les chaînes de traitement peuvent être formées à partir de fibres à maintien de polarisation et/ou de fibres optiques monomodes.

Les modes de réalisation de l'invention fournissent ainsi un système de distribution quantique de clés de cryptage comprenant un émetteur et un récepteur.

Dans des modes de réalisation, le signal multiplexé peut être un signal multiplexé fréquentiellement.

Dans un mode de réalisation, la valeur absolue de la différence de longueur d'onde entre le signal quantique encodé et le premier et/ou le deuxième signal intégré peut être supérieure ou égale à une première valeur minimale de différence de longueur d'onde, et la valeur absolue de la différence de longueur d'onde entre le premier signal de contrôle et le deuxième signal de contrôle peut être supérieure ou égale à une deuxième valeur minimale de différence de longueur d'onde.

La présente invention propose de plus un procédé d'émission pour transmettre un signal multiplexé à travers un canal de transmission, le procédé comprenant les étapes consistant à :

- générer un signal quantique initial, un premier signal de référence et un deuxième signal de référence,

- sélectionner une voie optique parmi une pluralité de N voies optiques, les voies optiques comprenant une première voie optique et une deuxième voie optique, et diriger le signal quantique initial généré vers la voie optique sélectionnée,

- insérer le premier signal de référence dans la première voie optique et le deuxième signal de référence dans la deuxième voie optique,

- former le signal multiplexé, le signal multiplexé comprenant un premier signal de contrôle d'une première valeur d'encodage en polarisation, un deuxième signal de contrôle d'une deuxième valeur d'encodage en polarisation, et un signal quantique encodé sur une valeur d'encodage en polarisation choisie parmi un ensemble de valeurs comprenant au moins la première valeur d'encodage en polarisation et la deuxième valeur d'encodage en polarisation, le signal quantique encodé étant déterminé à partir du signal quantique initial délivré par la voie optique sélectionnée, le premier signal de contrôle étant déterminé à partir du premier signal de référence délivré par la première voie optique, et le deuxième signal de contrôle étant déterminé à partir du deuxième signal de référence délivré par la deuxième voie optique.

La présente invention propose également un procédé de réception d'un signal multiplexé à travers un canal de transmission, le signal multiplexé comprenant un signal quantique encodé, un premier signal de contrôle d'une première valeur d'encodage en polarisation et un deuxième signal de contrôle d'une deuxième valeur d'encodage en polarisation, le procédé comprenant l'étape consistant à séparer le signal multiplexé en deux composantes de signal comprenant une composante du premier signal de contrôle et une composante du deuxième signal de contrôle, chaque composante de signal parcourant respectivement une chaîne de traitement associée à une base de polarisation composée d'au moins un état en polarisation, une des composantes de signal comprenant en outre le signal quantique encodé.

Le procédé de réception comprend en outre les étapes itératives consistant à :

- déterminer l'état de polarisation d'un signal intégré de contrôle de la composante de signal parcourant la chaîne, et

- modifier la polarisation de la composante de signal de manière à aligner l'état de polarisation déterminé par rapport à un des au moins un état en polarisation de la base associée.

Le procédé de réception comprend l'étape consistant à déterminer le signal quantique encodé selon au moins un des au moins un état en polarisation de la base associée.

Les modes de réalisation de l'invention permettent ainsi de corriger les rotations de polarisation des qubits (définis selon au moins deux bases de polarisation différentes et non-orthogonales) transmis entre un émetteur et un récepteur de signal quantique, afin d'établir une clé quantique.

En particulier, les modes de réalisation de l'invention fournissent un émetteur de signal permettant d'intégrer de manière robuste des signaux de références de polarisation à un signal de communication quantique.

De telles références peuvent être générées à une puissance quelconque, indépendamment de la génération des qubits, pour former une solution efficace et abordable en termes de complexité matérielle. L'émetteur en optique guidée, selon les modes de réalisation de l'invention, présente avantageusement une compacité volumique et massique réduite, ainsi qu'un encombrement et une robustesse optimisés. Par ailleurs, un multiplexage fréquentiel de telles références aux qubits permet de maintenir un débit important de transmission d'information utile (i.e. les qubits).

Le récepteur selon les modes de réalisation de l'invention permet de corriger en temps réel les rotations de polarisation subies par les qubits avant détection. Un tel récepteur permet notamment d'analyser les qubits et les signaux de références de polarisation indépendamment, afin d'aligner au mieux la polarisation des qubits avec des bases de mesures du récepteur.

**Description des figures**

D'autres caractéristiques, détails et avantages de l'invention ressortiront à la lecture de la description faite en référence aux dessins annexés donnés à titre d'exemple.

[Fig.1] La figure 1 est un schéma représentant un système de communication quantique, selon des modes de réalisation de l'invention.

[Fig.2] La figure 2 est un schéma représentant un encodeur en polarisation d'un émetteur, selon des modes de réalisation de l'invention.

[Fig.3] La figure 3 est un schéma représentant un encodeur en polarisation d'un émetteur, selon des modes de réalisation de l'invention.

[Fig.4] La figure 4 est un schéma représentant un encodeur en polarisation d'un émetteur, selon des modes de réalisation de l'invention.

[Fig.5] La figure 5 est un schéma représentant un sélectionneur optique d'un encodeur en polarisation, selon des modes de réalisation de l'invention.

[Fig.6] La figure 6 est un schéma représentant un générateur de signaux d'un émetteur, selon des modes de réalisation de l'invention.

[Fig.7] La figure 7 est un schéma représentant un récepteur d'un système de communication quantique, selon des modes de réalisation de l'invention.

[Fig.8] La figure 8 est un schéma représentant un récepteur d'un système de communication quantique, selon des modes de réalisation de l'invention.

[Fig.9] La figure 9 est un schéma représentant un récepteur d'un système de communication quantique, selon des modes de réalisation de l'invention.

[Fig.10] La figure 10 module de détection d'un signal intégré de contrôle, utilisé dans une chaîne de traitement d'un récepteur, selon des modes de réalisation de l'invention.

[Fig.11] La figure 11 est un schéma représentant un module de détection d'un signal intégré de contrôle, utilisé dans une chaîne de traitement d'un récepteur, selon des modes de réalisation de l'invention.

[Fig.12] La figure 12 est un schéma représentant un module de détection d'un signal quantique, utilisé dans une chaîne de traitement d'un récepteur, selon des modes de réalisation de l'invention.

[Fig. 13] La figure 13 est un organigramme représentant un procédé d'émission d'un signal comprenant un signal quantique produit par un émetteur, selon des modes de réalisation de l'invention.

[Fig.14] La figure 14 est un organigramme un procédé d'émission d'un signal comprenant un signal quantique produit par un récepteur, selon des modes de réalisation de l'invention.

Des références identiques sont utilisées dans les figures pour désigner des éléments identiques ou analogues. Pour des raisons de clarté, les éléments représentés ne sont pas à l'échelle.

**Description détaillée**

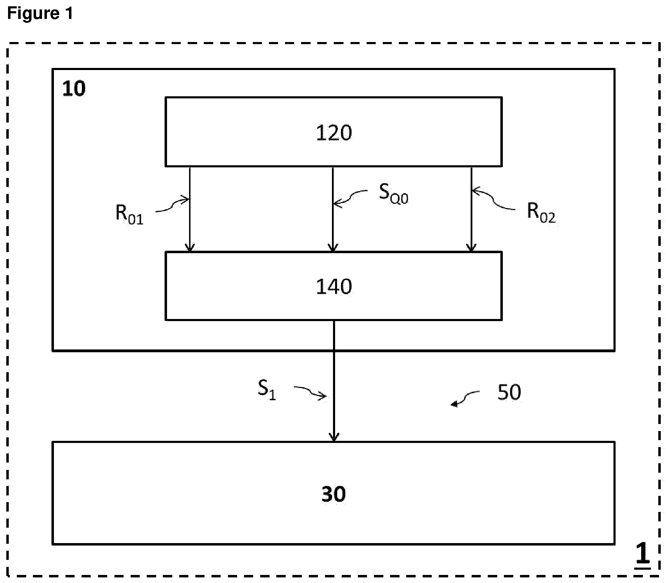

La figure 1 représente schématiquement un système de communication quantique 1 comprenant deux dispositifs communiquant 10 et 30 aptes à communiquer entre eux, selon des modes de réalisation de l'invention. Les deux dispositifs comprennent un émetteur 10 (ou dispositif émetteur), encore appelé 'Alice', et un récepteur 30 (ou dispositif récepteur), encore appelé 'Bob'.

Le système de communication quantique 1 peut être utilisé par exemple dans le domaine spatial et comprendre un émetteur 10 (ou réciproquement un récepteur 30) monté à bord d'un satellite tandis que le récepteur 30 (ou réciproquement l'émetteur 10) est un dispositif terrestre (i.e. au sol). En variante, le système 1 peut être utilisé dans une application où au moins un des dispositifs émetteur 10 et récepteur 30 est un dispositif avionique. En outre, le système 1 peut être utilisé dans une application où au moins un des dispositifs émetteur 10 et récepteur 30 est un dispositif tout-optique guidée, potentiellement intégré dans un réseau fibré au sol. Le dispositif émetteur 10 et/ou le dispositif récepteur 30 peut être fixe ou en mouvement par rapport à l'autre dispositif avec lequel il communique (30 ou 10 selon le cas).

L'émetteur 10 comprend un générateur de signaux 120 et un encodeur en polarisation 140.

Tel qu'utilisé ici, un 'signal optique' (encore appelé simplement « signal ») résulte d'une ou plusieurs impulsions de lumière cohérente provenant d'une source optique, telle que par exemple un faisceau laser. Un faisceau laser peut notamment être caractérisé par sa cadence d'impulsions f et par une impulsion laser (i.e. le signal) définie par sa fréquence $\omega$, son intensité I, sa polarisation P et sa phase. La 'fréquence $\omega$' du faisceau laser désigne la 'fréquence optique de l'impulsion laser multipliée par $2\pi$' définie en fonction de la longueur d'onde du faisceau $\lambda$, telle que $\lambda \times \frac{\omega}{2\pi} = c$, c désignant la vitesse de la lumière.

Un 'signal quantique' peut faire référence à un signal optique impulsionnel ayant en moyenne moins d'un photon par impulsion. Dans le cadre de cette invention, un signal quantique émis peut faire référence à un signal optique impulsionnel ayant un faible nombre de photon par impulsion. La mesure d'un signal quantique fournit une mesure de détection d'un photon dépendant d'une « probabilité de détection » de ce photon.

L'émetteur 10 est configuré pour générer et transmettre, à travers un canal de transmission 50, un signal optique multiplexé (encore appelé 'signal optique multiplexé' ou 'signal de communication multiplexé'), noté $S_1$. Le signal multiplexé $S_1$ comprend un signal quantique, noté $S_{Q1}$, où l'information utile y est encodée sur la polarisation des impulsions constituant le signal quantique. La polarisation d'un photon du signal quantique encodé $S_{Q1}$ est choisie parmi un ensemble P d'états (encore appelés 'états d'encodage' ou 'valeurs d'encodage') comprenant au moins une première valeur d'encodage en polarisation, noté $P_1$, et une deuxième valeur d'encodage en polarisation, noté $P_2$. Le signal multiplexé $S_1$ comprend également un premier signal optique intégré $R_{11}$ de contrôle de la première valeur d'encodage en polarisation $P_1$ (encore appelé 'premier signal de contrôle' $R_{11}$) et un deuxième signal optique intégré $R_{12}$ de contrôle de la deuxième valeur d'enco-

dage en polarisation $P_2$ (encore appelé 'deuxième signal de contrôle' $R_{12}$).

Le canal de transmission 50 peut être par exemple un espace libre ou un dispositif fibré de transport d'informations utilisant par exemple des éléments de fibre optique pour la communication, selon le domaine d'application de l'invention.

Le récepteur 30 est configuré pour recevoir le signal multiplexé $S_1$ du canal de transmission 50, transmis par l'émetteur 10, et effectuer une estimation des signaux de contrôle reçus, ce qui fournit des signaux de contrôle estimés $R_{31}$ et $R_{32}$. Le récepteur 30 est en outre configuré pour effectuer une estimation du signal quantique reçu, ce qui fournit un signal quantique reçu estimé $S_{Q3}$, à partir des signaux de contrôle estimés $R_{31}$ et $R_{32}$.

Selon un aspect de l'invention, l'émetteur 10 et le récepteur 30 sont configurés pour déterminer (i.e. établir) une clé de cryptage quantique, en utilisant le signal quantique encodé en polarisation $S_{Q1}$ et le signal quantique reçu estimé $S_{Q3}$. Le système 1 peut ainsi être un système de distribution quantique de clés de cryptage configuré pour procéder à une distribution quantique de clé(s) au sein d'un service de communication spatial ou terrestre dans le but d'assurer la sécurisation d'une partie ou de l'ensemble des communications échangées entre l'émetteur et le récepteur.

Dans des modes de réalisation, le système de communication quantique 1 peut comprendre une pluralité de récepteurs 30 distincts. Dans ce cas, l'émetteur 10 peut être configuré pour générer et transmettre à au moins deux des récepteurs distincts, par exemple de façon séquentielle, un signal optique multiplexé spécifique. Le système 1 peut ainsi être configuré pour procéder à une distribution quantique de clé(s) entre ces récepteurs distincts.

Le signal multiplexé $S_1$ est généré, via l'encodeur en polarisation 140 (encore appelé 'module d'encodage en polarisation'), à partir d'un signal quantique initial, noté $S_{Q0}$, d'un premier signal de référence, noté $R_{01}$, et d'un deuxième signal de référence, noté $R_{02}$. Le signal quantique initial $S_{Q0}$ et les signaux de référence $R_{01}$ et $R_{02}$ sont issus du générateur de signaux 120, comme représenté sur la figure 1.

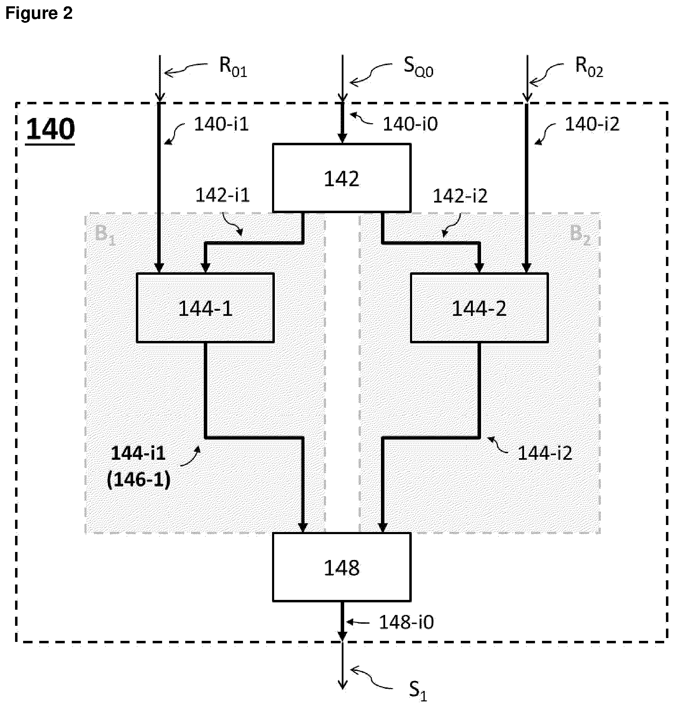

Les figures 2, 3 et 4 représentent schématiquement l'encodeur en polarisation 140 de l'émetteur 10 configuré pour former le signal multiplexé $S_1$, selon des modes de réalisation de l'invention.

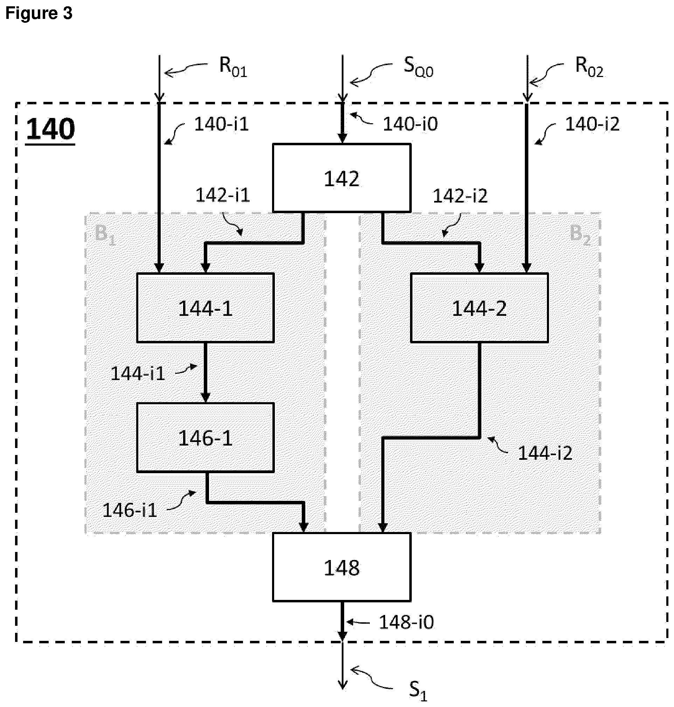

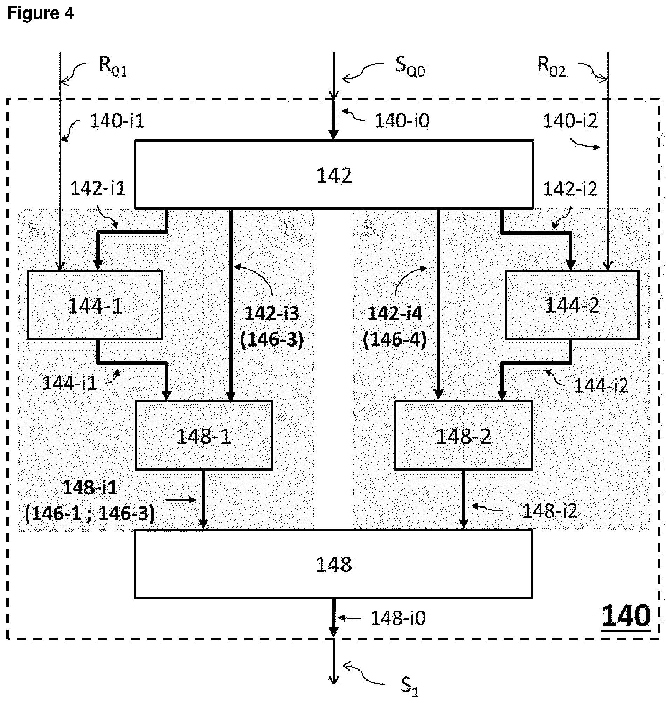

L'encodeur en polarisation 140 peut être implémenté sous la forme d'un instrument optique, de type interféromètre optique par exemple, composé d'une pluralité de N bras optiques (encore appelés 'voies optiques') d'encodage en polarisation $B_n$. L'indice 'n' désigne l'indice du nième bras optique de l'encodeur en polarisation 140 et est un entier compris entre 1 et N, la valeur de N étant supérieure ou égal à 2. En particulier, la valeur de N peut être un entier égal à 2, comme dans les exemples des figures 2 et 3, ou un entier égal à 4 comme dans l'exemple de la figure 4. L'encodeur en polarisation 140 comprend ainsi au moins un premier bras optique $B_1$ (i.e. 'première voie optique $B_1$') et un deuxième bras optique $B_2$ (i.e. 'deuxième voie optique $B_2$').

L'encodeur en polarisation 140 comprend un sélectionneur optique 142 (encore appelé 'unité de sélection de chemin optique', 'sélecteur optique', 'routeur optique' ou 'commutateur optique') et un recombineur optique 148 (encore appelé 'unité de recombinaison de chemin optique' ou 'unité de recombinaison de faisceaux') configuré pour délivrer le signal multiplexé $S_1$ émis par l'émetteur 10. Les différents bras optiques $B_n$ s'étendent entre le sélectionneur optique 142 et le recombineur optique 148.

Le sélectionneur optique 142 de l'encodeur en polarisation 140 est configuré pour recevoir le signal quantique initial $S_{Q0}$ et pour le diriger (c'est-à-dire le router) vers un des bras optique $B_n$. L'encodeur en polarisation 140 peut ainsi être configuré pour contrôler le sélectionneur optique 142, c'est-à-dire pour contrôler la direction de propagation du signal quantique initial $S_{Q0}$ vers l'un des bras optiques $B_n$, en réponse à un signal de commande $S_{C14}$. Par exemple et sans limitation, un tel signal de commande $S_{C14}$ peut être un signal électrique ou radiofréquence, construit à partir d'un nombre N de valeurs de commande, chaque valeur de commande correspondant à un bras optique d'encodage en polarisation $B_n$. Ainsi, le signal de commande $S_{C14}$ peut comprendre une pluralité de valeurs choisies, aléatoirement par exemple, parmi les valeurs de commande prédéfinies.

L'encodeur en polarisation 140 comprend également une première unité d'intégration de signal 144-1 et une deuxième unité d'intégration de signal 144-2. La première unité d'intégration de signal 144-1 est agencée sur le premier bras optique $B_1$ de l'encodeur 140 et est configurée pour insérer (c'est-à-dire incorporer) le premier signal de référence $R_{01}$ dans le premier bras optique $B_1$. La deuxième unité d'intégration de signal 144-2 est agencée sur le deuxième bras optique $B_2$ de l'encodeur 140 et est configurée pour insérer le deuxième signal de référence $R_{02}$ dans le deuxième bras optique $B_2$.

En d'autres termes, en réponse à un signal de commande $S_{C14}$ spécifique, le sélectionneur optique 142 peut être configuré pour diriger vers le premier bras optique $B_1$. La première unité d'intégration 144-1 peut ainsi être configurée pour multiplexer (ou combiner) le premier signal de référence $R_{01}$ avec le signal éventuel qui circule dans le premier bras optique $B_1$ (c'est-à-dire le signal quantique initial s'il a été dirigé dans le premier bras optique $B_1$ par le sélectionneur optique 142). Si le signal quantique initial $S_{Q0}$ n'est pas dirigé vers le premier bras optique $B_1$, le sélectionneur optique 142 peut être configuré pour diriger le signal $S_{Q0}$ vers le deuxième bras optique $B_2$. La deuxième unité d'intégration de signal 144-2 peut ainsi être configurée pour multiplexer le deuxième signal de référence $R_{02}$ avec le signal éventuel qui circule dans le deuxième bras optique $B_2$ (c'est-à-dire le signal quantique s'il a été plutôt dirigé dans le deuxième bras optique $B_2$ par le sélectionneur optique 142 et non dans le premier bras optique $B_1$).

Dans des modes de réalisation où l'encodeur en polarisation 140 est composé d'un nombre N bras optiques strictement supérieure à 2, en réponse à un signal de commande $S_{C14}$ spécifique, le sélectionneur optique 142 peut en outre être configuré pour diriger le signal quantique initial $S_{Q0}$ vers un bras optique $B_n$, qui est distinct du premier bras optique $B_1$ et du deuxième bras optique $B_2$.

Par exemple, pour un encodeur en polarisation 140 comprenant deux bras optiques d'encodage en polarisation $B_1$ et $B_2$, comme représenté par exemple sur les figures 2 et 3, si le sélectionneur optique 142 dirige le signal quantique initial $S_{Q0}$ vers le premier bras optique $B_1$, le signal résultant en sortie de la première unité d'intégration de signal 144-1 résulte du multiplexage optique du premier signal de référence $R_{01}$ et du signal quantique initial $S_{Q0}$ qui a été acheminé dans le premier bras optique $B_1$, tandis que le signal résultant en sortie de la deuxième unité d'intégration de signal 144-2 comprend uniquement le deuxième signal de référence $R_{02}$. Alternativement, si le sélectionneur optique 142 dirige le signal quantique initial $S_{Q0}$ vers le deuxième bras optique $B_2$, le signal résultant en sortie de la première unité d'intégration de signal 144-1 comprend uniquement le premier signal de référence $R_{01}$, tandis que le signal résultant en sortie de la deuxième unité d'intégration de signal 144-2 résulte du multiplexage optique du deuxième signal de référence $R_{02}$ et du signal quantique initial $S_{Q0}$.

Selon un autre exemple, pour un encodeur en polarisation 140 comprenant quatre bras optiques d'encodage en polarisation $B_1$, $B_2$, $B_3$ et $B_4$, comme représenté sur la figure 4, si le sélectionneur optique 142 dirige le signal quantique initial $S_{Q0}$ vers le premier ou vers le deuxième bras optique $B_1$ ou $B_2$, alors aucun signal ne circule (i.e. se propage) sur le troisième et le quatrième bras optique $B_3$ et $B_4$. En outre, c'est-à-dire qu'aucun signal n'est délivré par le troisième et le quatrième bras optique $B_3$ et $B_4$ au recombineur optique 148. Alternativement, si le sélectionneur optique 142 dirige le signal quantique initial $S_{Q0}$ vers le troisième ou vers le quatrième bras optique $B_3$ ou $B_4$, les signaux résultants en sortie de la première unité d'intégration de signal 144-1 et la deuxième unité d'intégration de signal 144-2 comprennent respectivement uniquement le premier signal de référence $R_{01}$ ou le deuxième signal de référence $R_{02}$. Dans ce cas, un signal quantique, déterminé à partir du signal quantique initial $S_{Q0}$, est délivré par le troisième bras optique $B_3$ (ou par le quatrième bras optique $B_4$) au recombineur optique 148, et aucun signal n'est délivré par délivré par le quatrième bras optique $B_4$ (ou respectivement par le troisième bras optique $B_3$), en fonction de la voie optique sélectionnée par le sélectionneur optique 142.

Chaque bras optique $B_n$ de l'encodeur en polarisation 140 est associé à une valeur d'encodage en

polarisation $P_n$ spécifique de faisceaux. L'ensemble P de variables possibles comprend ainsi la pluralité de N variables d'encodage $P_n$ qui sont distinctes entre elles. Avantageusement, chaque valeur de commande du signal $S_{C14}$ du sélectionneur optique 142, correspondant à un bras optique d'encodage en polarisation $B_n$, correspond également à un état d'encodage en polarisation $P_n$. Le signal de commande $S_{C14}$ peut ainsi permettre de former au moins une partie d'une clé de cryptage quantique dite brute et à partager entre l'émetteur 10 et le récepteur 30 dans le système 1. L'information utile est alors transportée par le signal quantique (i.e. les particules quantiques) modulé selon les états d'encodage $P_n$ selon chacun des bras optiques de l'émetteur Alice.

Dans de tels modes de réalisation, un bras optique $B_n$ de l'encodeur en polarisation 140 peut comprendre en outre un élément optique 146-n (encore appelé 'unité de modification de polarisation' ou 'unité d'encodage') configuré pour modifier (ou encoder) la polarisation d'un signal optique qui parcourt le bras optique $B_n$ selon la valeur d'encodage $P_n$ associée audit bras optique.

Par exemple, l'encodeur en polarisation 140 peut comprendre au moins un premier élément optique 146-1 disposé sur le premier bras optique $B_1$, entre la sortie de la première unité d'intégration de signal 144-1 et l'entrée du recombineur optique 148, de manière à modifier la polarisation du signal résultant en sortie de la première unité d'intégration de signal 144-1 (c'est-à-dire le signal correspondant au multiplexage du premier signal de référence $R_{01}$ et du signal quantique initial $S_{Q0}$, ou uniquement le signal correspondant au premier signal de référence $R_{01}$), selon la première valeur d'encodage en polarisation $P_1$ associée au premier bras optique $B_1$.

Avantageusement, le signal quantique initial $S_{Q0}$, le premier signal de référence $R_{01}$, et le deuxième signal de référence $R_{02}$, issus du générateur de signaux 120 peuvent initialement être caractérisés par une même polarisation $P_0$ en entrée de l'encodeur en polarisation 140. Par exemple et sans limitation, une telle polarisation initiale $P_0$ peut être une polarisation linéaire, de type H, c'est à dire « horizontale » (ou alternativement de type V, c'est à dire « verticale »). Dans ce cas, une valeur d'encodage en polarisation $P_n$ d'un bras optique $B_n$ comprenant une unité d'encodage 146-n peut correspondre à une polarisation linéaire de type V (ou respectivement de type H). Ainsi, un élément optique 146-n peut être configuré pour faire tourner d'un angle de $\pm 90°$ (c'est-à-dire appliquer une rotation de $\pm 90°$ à) la polarisation initiale $P_0$ d'un signal optique délivré en sortie du sélectionneur optique 142, et/ou en sortie d'une unité d'intégration de signal (144-1 et/ou 144-2) sur le bras optique $B_n$. Une telle valeur d'encodage en polarisation $P_n$ peut par ailleurs correspondre à une polarisation linéaire de type D, c'est à dire « diagonal » (ou de type A, c'est à dire « anti-diagonal »). Dans ce cas, l'élément optique 146-n peut être configuré pour faire tourner d'un angle de $\pm 45°$ (c'est-à-dire appliquer une rotation de ±45° à) la polarisation initiale $P_0$ d'un signal optique parcourant le bras optique $B_n$ en sortie du sélecteur optique 142, et/ou en sortie d'une unité d'intégration de signal (144-1 et/ou 144-2).

Dans des modes de réalisation, l'encodeur en polarisation 140 peut être un dispositif tout-optique guidée. Tel qu'utilisé ici, le terme 'dispositif tout-optique guidée' fait référence à un dispositif optique dont les voies optiques de transmission de signal sont constituées de fibres optiques et/ou de guides d'onde dits intégrés utilisés typiquement en photonique intégrée. Dans ce cas, une unité d'encodage 146-n peut comprendre un ou plusieurs moyens de transmission à rotation de polarisation, adaptés pour appliquer une rotation d'angle à la polarisation d'un signal optique délivré à la sortie d'une unité d'intégration de signal (144-1 et/ou 144-2) ou au signal quantique initial en sortie du sélecteur optique 142, sur le bras optique $B_n$.

Par exemple et sans limitation, une telle unité d'encodage 146-n peut être mise en œuvre sous la forme d'une fibre dite 'fibre à rotation de polarisation' et correspondant notamment à une fibre à maintien de polarisation, ou PMF (acronyme pour l'expression anglo-saxonne *Polarization Maintaining Fiber)*, et comprenant un axe de contrainte qui modifie (ou tourne) de manière adaptée la polarisation du signal, traversant cette fibre, selon un angle prédéterminé par la polarisation initiale dudit signal et la valeur d'encodage $P_n$ associé au bras optique $B_n$. De tels modes de réalisation sont illustrés sur les figures 2 et 4. En particulier, sur la figure 2, le moyen de transmission 144-i1 correspond à l'unité d'encodage 146-1 du bras optique $B_1$, tandis que sur la figure 4, le moyen de transmission 148-i1 correspond à l'unité d'encodage 146-1 du bras optique $B_1$ et par ailleurs le moyen de transmission 142-i4 correspond à l'unité d'encodage 146-4 du bras optique $B_4$.

Avantageusement, l'encodeur en polarisation 140 peut comprendre un ou plusieurs recombineurs optiques intermédiaires permettant d'alléger la structure de l'instrument optique en combinant (ou rationalisant) certaines fonctions optiques. Par exemple, sur la figure 4, l'encodeur en polarisation 140 comprend les recombineurs optiques intermédiaires 148-1 et 148-2 agencés en amont du recombineur optique 148 délivrant le signal multiplexé $S_1$. Dans ce cas, une unité d'encodage 146-n peut être composée de plusieurs fibres à rotation de polarisation, implémentées sous la forme de fibres à maintien de polarisation PMF comprenant chacune un axe de contrainte, dont la résultante est adaptée à l'angle de rotation de polarisation prédéterminé par la valeur d'encodage $P_n$ associée au bras optique $B_n$. Ce mode de réalisation est illustré par l'agencement de la figure 4 qui utilise une combinaison des moyens de transmission 142-i3 et 148-i1 correspondant à l'unité d'encodage 146-3 du bras optique $B_3$. De tels recombineurs optiques intermédiaires permettent de diminuer le nombre total de moyens de transmission à rotation de polarisation pour coder les différents valeurs d'encodage $P_n$ de l'émetteur 10 à mettre en œuvre, via la combinaison de moyens de transmission pour former des unités d'encodage résultantes.

Dans l'exemple illustré sur la figure 4, chaque bras optique $B_1$, $B_2$, $B_3$ ou $B_4$ est formé à partir du sélecteur optique 142 jusqu'au recombineur optique 148, les bras optiques $B_1$ et $B_3$, et les bras optiques $B_2$ et $B_4$, possédant respectivement des chemins optiques communs 148-i1 et 148-i2. A titre d'illustration, les moyens de transmission 142-i3 et 142-i4, représentés sur la figure 4, qui s'étendent entre le sélecteur optique 142 et l'entrée des recombineurs optiques intermédiaires 148-1 et 148-2, sans éléments intermédiaires, peuvent être configurés pour faire tourner d'un angle de +90° la polarisation initiale $P_0$ du signal quantique parcourant respectivement les bras optiques $B_3$ et $B_4$. En outre, le moyen de transmission 148-i1, agencé entre la sortie du premier recombineur optique intermédiaire 148-1 et l'entrée du recombineur optique 148, peut être configuré pour faire tourner d'un angle de +45° la polarisation du signal résultant parcourant le chemin optique commun aux bras optiques $B_1$ et $B_3$ (c'est-à-dire le signal comprenant au moins le premier signal de référence $R_{01}$). Dans cet exemple, la valeur d'encodage en polarisation $P_1$ du bras optique $B_1$ peut correspondre à une rotation de polarisation de +45°, la valeur d'encodage en polarisation $P_3$ du bras optique $B_3$ peut correspondre à une rotation de polarisation de -45°, et la valeur d'encodage en polarisation $P_4$ du bras optique $B_4$ peut correspondre à une rotation de polarisation de 90°.

Alternativement, dans des modes de réalisation où l'encodeur en polarisation 140 est un dispositif comprenant au moins un moyen de transmission de signal en espace libre, une unité d'intégration (144-1 ; 144-2) peut être mise en œuvre à partir d'un ou plusieurs filtres dichroïques. En outre, une unité d'encodage 146-n peut être mise en œuvre à partir d'une ou plusieurs lames minces à rotation de polarisation (ou lame à retard), telles qu'une lame demi-onde et/ou une lame quart d'onde, comme représentée sur la figure 3.

Dans des modes de réalisation, une valeur d'encodage en polarisation $P_n$, associée au bras optique $B_n$ peut correspondre directement à la polarisation initiale $P_0$. Dans ce cas, un tel bras optique de l'encodeur en polarisation 140 peut être agencé pour ne pas modifier la polarisation du ou des signaux optiques le parcourant (i.e. rotation de polarisation de 0°). Le bras optique $B_n$ de l'encodeur en polarisation 140 peut ainsi comprendre un ou plusieurs moyens de transmission à maintien de polarisation, et adaptés pour transmettre le ou les signaux optiques du signal résultant en sortie de l'unité d'intégration de signal 144-n vers l'entrée du recombineur optique 148, ou le signal quantique initial en sortie du sélecteur optique 142 vers l'entrée du recombineur optique 148. De tels moyens de transmission peuvent être par exemple une fibre à maintien de polarisation PMF, si l'encodeur en polarisation 140 est un dispositif tout-optique guidée.

A titre d'illustration, comme représenté sur les figures 2, 3 et 4, la deuxième valeur d'encodage en polarisation $P_2$ du signal résultant du deuxième bras optique $B_2$, à l'entrée du recombineur optique 148 (c'est-à-dire le multiplexage du deuxième signal de référence $R_{02}$ et du signal quantique initial $S_{Q0}$, ou uniquement le deuxième signal de référence $R_{02}$) peut être caractérisé par la polarisation initiale $P_0$, c'est-à-dire par exemple et sans limitation la polarisation linéaire initiale de type H (ou de type V). Dans ce cas, les moyens de transmission 144-i2 et 148-i2, agencés entre l'unité d'intégration de signal 144-n et l'entrée du recombineur optique 148, peuvent être des fibres à maintien de polarisation PMF.

Dans des modes de réalisation, le recombineur optique 148 et optionnellement le ou les recombineurs optiques intermédiaires (148-1, 148-2) de l'encodeur en polarisation 140 peuvent également être des coupleurs optiques (par exemple en Y fibrés) adaptés pour combiner des signaux résultants issus de bras optiques $B_n$ de l'encodeur 140. De tels coupleurs optiques peuvent notamment être des coupleurs à maintien de polarisation. Dans certains modes de réalisation, le recombineur optique 148 peut être le télescope du satellite dans lequel l'émetteur 10 est monté à bord.

Le premier signal de référence $R_{01}$, modifié en polarisation en traversant le premier bras optique $B_1$ (i.e. l'unité de modifier de polarisation 146-1), est encodé sur la première valeur d'encodage $P_1$ pour former, à l'entrée du recombineur optique 148, le premier signal de contrôle $R_{11}$ de la première valeur d'encodage en polarisation $P_1$. De manière équivalente, le deuxième signal de référence $R_{02}$, modifié ou non en polarisation en traversant le deuxième bras optique $B_2$, est alors dit « encodé » sur la deuxième valeur d'encodage $P_2$ pour former, à l'entrée du recombineur optique 148, le deuxième signal de contrôle $R_{12}$ de la deuxième valeur d'encodage en polarisation $P_2$. Le signal quantique initial $S_{Q0}$, modifié ou non en polarisation en traversant l'un quelconque des bras optiques $B_n$ de l'encodeur en polarisation 140 est alors dit « encodé » sur la valeur d'encodage $P_n$ pour former, à l'entrée du recombineur optique 148, le signal quantique encodé $S_{a1}$.

Dans des modes de réalisation où l'encodeur en polarisation 140 est un dispositif tout-optique guidée, l'encodeur en polarisation 140 peut comprendre en outre une pluralité de fibres optiques adaptées pour transmettre le ou les signaux optiques entre les différentes unités de l'encodeur (et en particulier des bras optiques $B_n$). Une partie ou l'ensemble de ces fibres optiques peuvent notamment être des fibres à maintien de polarisation PMF. Avantageusement, les moyens de transmission 142-i1 et 142-i2 entre le sélectionneur optique 142 et les unités d'intégration de signal 144-1 et 144-2, représentés sur les figures 2, 3 et 4, peuvent être des fibres à maintien de polarisation PMF. Les moyens de transmission 144-i1 et 146-i1 du bras optique $B_1$, représentés sur les figures 3 et 4, peuvent également être des fibres à maintien de polarisation PMF.

Dans certains modes de réalisation, les moyens de transmission 140-i0, 140-i1 et 140-i2 d'entrée des signaux optiques issus du générateur de signaux 120 dans l'encodeur en polarisation 140, représentés sur les figures 2, 3 et 4, peuvent être des fibres optiques monomodes ou SMF (acronyme pour l'expression anglo-saxonne *Single Mode Fibre*) et/ou des fibres à maintien de polarisation PMF. Le moyen de transmission 148-i0 de sortie du signal multiplexé $S_1$ dans l'encodeur en polarisation 140 peut être une fibre optique monomode SMF.

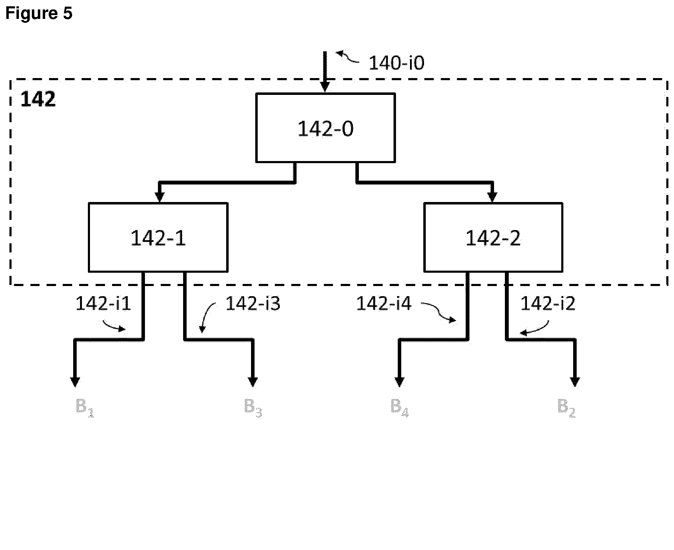

La figure 5 représente schématiquement un sélectionneur optique 142 d'un encodeur en polarisation 140 comprenant quatre bras optiques $B_1$, $B_2$, $B_3$ et $B_4$, selon des modes de réalisation de l'invention. Dans ce cas, le sélectionneur optique 142 peut comprendre un ensemble de sélectionneurs optiques intermédiaires (142-0, 142-1 et 142-2) configurés pour recevoir le signal quantique initial $S_{Q0}$ et pour le diriger vers un chemin optique spécifique. Chaque sélectionneur optique intermédiaire peut être contrôlé individuellement par un sous signal de commande ($S_{C14-0}$, $S_{C14-1}$ et $S_{C14-2}$) défini par exemple à partir du signal de commande $S_{C14}$ de contrôle du sélectionneur optique 142.

Il est à noter qu'un encodeur 140 peut être configuré pour encoder en polarisation le signal quantique initial $S_{Q0}$ sur deux bases de polarisation différentes et non-orthogonales, comme illustré sur la figure 4, comprenant :

- une première base correspondant en particulier aux valeurs d'encodage en polarisation $P_1$ et $P_3$ des deux bras optiques $B_1$ et $B_3$ (formés par un premier sélectionneur optique intermédiaire 142-1 et liés par un premier recombineur optique intermédiaire 148-1), comme par exemple la base diagonale (D/A), et

- une deuxième base correspondant en particulier aux valeurs d'encodage en polarisation $P_2$ et $P_4$ des deux bras optiques $B_2$ et $B_4$ (formés par un deuxième sélectionneur optique intermédiaire 142-2 et liés par un deuxième recombineur optique intermédiaire 148-2), comme par exemple la base rectiligne (H/V).

Un tel encodeur permet donc de générer quatre états d'encodage distincts, H, V, D et A, et d'utiliser ces quatre états pour appliquer le protocole de distribution quantique de clé nommé BB84 (comme décrit dans l'article "Quantum cryptography: Public key distribution and coin tossing" de C. Bennett et G. Brassard, 1884, Theoretical Computer Science, vol. 560, 1984, p. 7-11).

Par ailleurs, il est à noter qu'un encodeur 140 peut être configuré pour encoder en polarisation le signal quantique initial $S_{Q0}$ uniquement sur deux états de polarisation différents, comme illustré sur les figures 2 et 3. Dans ce mode de réalisation, l'encodeur 140 comprend uniquement deux bras optiques d'encodage, chacun de ces états pouvant être assimilé à une base d'encodage dit 'base simplifiée', à titre de simplification. Les deux bases simplifiées peuvent avantageusement être non-orthogonales. Dans ce cas, une première base simplifiée peut par exemple correspondre à la valeur d'encodage en polarisation $P_1$ du bras optique $B_1$, et correspondre par exemple à une polarisation linéaire de type D (ou A), tandis qu'une deuxième base simplifiée peut par exemple correspondre à la valeur d'encodage $P_2$ du bras optique $B_2$ et correspondre par exemple à une polarisation linéaire de type H (ou V).

Avantageusement, le premier signal de contrôle $R_{11}$ de la première valeur d'encodage en polarisation $P_1$, peut correspondre au signal de contrôle de la première base d'encodage de polarisation (par exemple la base D/A ou autre base simplifiée). Similairement, le deuxième signal de contrôle $R_{12}$ de la deuxième valeur d'encodage en polarisation $P_2$, peut correspondre au signal de contrôle de la deuxième base d'encodage de polarisation (par exemple la base H/V ou autre base simplifiée).

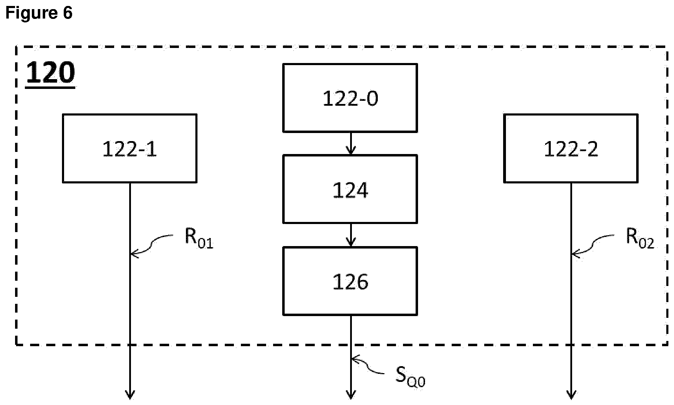

Dans des modes de réalisation, le signal multiplexé $S_1$ peut être multiplexé fréquentiellement. Dans ce cas, le générateur de signaux 120 (encore appelé 'module de génération de signaux") de l'émetteur 10 peut être configuré pour générer un signal quantique initial $S_{Q0}$ de longueur d'onde notée $\lambda_Q$, un premier signal de référence $R_{01}$ de longueur d'onde notée $\lambda_{R1}$ et un deuxième signal de référence $R_{02}$ de longueur d'onde notée $\lambda_{R2}$, ces trois longueurs d'onde étant distinctes entre elles. La figure 6 représente schématiquement un tel générateur de signaux 120, selon des modes de réalisation de l'invention.

Avantageusement, le générateur de signaux 120 peut comprendre une première source laser 122-0 émettant un faisceau laser de longueur d'onde $\lambda_Q$ (équivalent à une fréquence $\omega_Q$). La longueur d'onde $\lambda_Q$ d'émission laser (encore appelée 'longueur d'onde quantique') peut se situer dans le visible ou l'infrarouge. Par exemple et de façon non limitative, la première source laser 122-0 peut être une diode laser DFB (acronyme pour l'expression anglo-saxonne correspondante *'Distributed Feedback',* signifiant à rétroaction distribuée) utilisant un réseau de Bragg permettant de choisir la longueur d'onde d'émission $\lambda_Q$. La longueur d'onde $\lambda_Q$ d'émission choisie de la diode laser peut être égale par exemple à 1550nm. Une telle diode laser émet notamment un faisceau laser continu. Alternativement, la première source laser 122-0 peut être une unité laser impulsionnel, c'est-à-dire à gain commuté (ou *gain-switched* selon l'expression anglo-saxonne).

Le générateur de signaux 120 peut également comprendre deux autres sources laser additionnelles 122-1 et 122-2, comme représenté sur la figure 6, configurées pour émettre respectivement un faisceau laser de longueur d'onde $\lambda_{R1}$ (équivalent à une fréquence $\omega_{R1}$) et un faisceau laser de longueur d'onde $\lambda_{R2}$ (équivalent à une fréquence $\omega_{R2}$). Les longueurs d'onde $\lambda_{R1}$ et $\lambda_{R2}$ d'émission laser (encore appelées 'longueurs d'onde de référence') peuvent se situer dans le visible ou l'infrarouge. Par exemple et de façon non limitative, les sources laser additionnelles 122-1 et 122-2 peuvent être des diodes laser DFB ou des unités laser impulsionnelles.

Dans des modes de réalisation, la différence fréquentielle entre la longueur d'onde quantique $\lambda_Q$ et une longueur d'onde de référence ($\lambda_{R1}$ et/ou $\lambda_{R2}$) peut être supérieure ou égale à une première valeur minimale $\delta\lambda$ de différence de longueur d'onde , selon l'inégalité (01) suivante :

$$|\lambda_Q - \lambda_{R1/R2}| \geq \delta\lambda \qquad (01)$$

Par ailleurs, la différence fréquentielle entre les longueurs d'onde de référence ($\lambda_{R1}$ et/ou $\lambda_{R2}$) de chacun des signaux de référence $R_{01}$ et $R_{02}$ peut être supérieure ou égale à une deuxième valeur minimale $\delta\lambda'$ de différence de longueur d'onde , selon l'inégalité (02) suivante :

$$|\lambda_{R1} - \lambda_{R2}| \geq \delta\lambda' \qquad (02)$$

Avantageusement, la première valeur minimale $\delta\lambda$ et la deuxième valeur minimale $\delta\lambda'$ de différence de longueur d'onde peuvent être prédéfinie et égale, par exemple et sans limitation, à 1.6nm et à 0.8nm respectivement.

Selon certains modes de réalisation, le module de génération de signaux 120 peut comprendre en outre une ou plusieurs unités de modulation d'intensité 124 configurées pour moduler l'intensité des impulsions laser générées en sortie de la première source laser 122-0 et former des impulsions quantiques. Une telle unité peut être utilisée pour implémenter un protocole sécurisé de distribution quantique de clé appliquant des états leurres (ou *Decoy States QKD* selon l'expression anglo-saxonne correspondante).

L'unité de modulation d'intensité 124 peut également être configurée pour moduler la cadence des impulsions laser, de l'ordre de quelques kilohertz jusqu'à quelques dizaines de gigahertz par exemple, et/ou la largeur temporelle des impulsions laser, par exemple jusqu'à quelques nanosecondes.

Dans les modes de réalisation où la première source laser 122-0 est continue, le générateur de signaux 120 peut comprendre une unité de modification de phase 126 configurée pour modifier la phase de chacune des impulsions quantiques. Avantageusement, l'unité de modification de phase peut être configurée pour rendre aléatoire (i.e. randomiser) la phase de chacune de ces impulsions quantiques, de manière à ce que les phases de deux impulsions quantiques consécutives soient indépendantes l'une par rapport à l'autre.

La randomisation de phase via l'utilisation d'une unité laser impulsionnelle et/ou d'une unité de modification de phase permet de se prémunir de certaines attaques d'interception de clé quantique pouvant être effectuées par un dispositif espion, appelé classiquement 'Eve', disposé sur le canal de transmission 50, qui cherche à intercepter le signal multiplexé $S_1$ (et donc le signal quantique encodé en polarisation $S_{Q1}$), transmis par l'émetteur 10 'Alice' et prenant en compte la cohérence de phase entre impulsions quantiques.

Dans les modes de réalisation où le signal multiplexé $S_1$ est multiplexé fréquentiellement (i.e. les longueurs d'onde quantique $\lambda_Q$ et de référence $\lambda_{R1}$ et $\lambda_{R2}$, sont distinctes entre elles) les unités d'intégration de signal 144-1 et 144-2 de l'encodeur en polarisation 140 peuvent être des unités de multiplexage en longueur d'onde ou WDM (signifiant selon l'expression anglo-saxonnes *Wavelength Division Multiplexing*) adaptées pour combiner le signal quantique initial $S_{Q0}$ dirigé et un des signaux de référence $R_{01}$ ou $R_{02}$ sur un même chemin optique en un signal résultant.

Dans des modes de réalisation, le signal multiplexé $S_1$ peut être multiplexé temporellement. Dans ce cas, le signal multiplexé $S_1$ peut être un signal comprenant un ensemble de trois impulsions distinctes temporellement, l'ensemble étant répétée selon de période T, les trois impulsions correspondant respectivement au signal quantique encodé en polarisation $S_{Q1}$, au premier signal de contrôle $R_{11}$ et au deuxième signal de contrôle $R_{12}$.

Avantageusement, le signal quantique initial $S_{Q0}$ et les signaux de référence $R_{01}$ et $R_{02}$ générés par le générateur de signaux 120 peuvent être des signaux impulsionnels caractérisés par une période T identique à la période du signal multiplexé $S_1$.

Dans des modes de réalisation, le générateur de signaux 120 peut être configuré pour générer le signal quantique initial $S_{Q0}$ et les signaux de référence $R_{01}$ et $R_{02}$ selon un décalage temporel prédéfini entre chaque impulsion des signaux. Alternativement (ou en outre), les unités d'intégration de signal 144-1 et 144-2 de l'encodeur en polarisation 140 peuvent être configurées pour appliquer un décalage temporel prédéfini de manière à obtenir des impulsions de signaux multiplexés temporellement.

La différence temporelle résultante entre chacune des impulsions distinctes successives peut ainsi être strictement inférieure à la période T de répétition du signal multiplexé $S_1$ résultant (ou du signal quantique initial $S_{Q0}$), selon les inégalités (03 et (04) suivantes :

$$|t_Q - t_{R1/R2}| < T \qquad (03)$$

$$|t_{R1} - t_{R2}| < T \qquad (04)$$

Dans ces modes de réalisation où le signal multiplexé $S_1$ est multiplexé temporellement, les longueurs d'onde quantique $\lambda_Q$ et de référence ($\lambda_{R1}$ et/ou $\lambda_{R2}$) peuvent être égales entre elles.

Dans ce cas, les sources laser additionnelles 122-1 et 122-2 peuvent par exemple être assimilées à la première source laser 122-0 et le générateur de signaux 120 peut comprendre en outre une unité de séparation de faisceau (non représentée sur les figures) configurée pour fournir deux composantes de signal associées aux signaux de référence $R_{01}$ et $R_{02}$, ainsi qu'une autre composante de signal associée au signal quantique initial $S_{Q0}$. Une telle unité de séparation de faisceau peut comprendre un ou plusieurs coupleurs optiques, symétriques ou asymétriques, par exemple à maintien de polarisation. L'unité de séparation de faisceau peut en outre être un sélectionneur optique générant un décalage temporel prédéfini entre chaque composante de signal délivrée.

Dans des modes de réalisation, l'unité de séparation de faisceau du générateur de signaux 120 peut être disposée en sortie de la première source laser 122-0, les signaux de référence $R_{01}$ et $R_{02}$ résultants correspondant alors des signaux d'impulsions lumineuses classiques (c'est-à-dire non quantiques). Alternativement, cette unité de séparation de faisceau peut être disposée en sortie d'une des unités additionnelles de génération du signal quantique (124, 126), les signaux de référence $R_{01}$ et $R_{02}$ résultants correspondant alors des signaux de faibles intensités lumineuses et/ou des signaux quantiques.

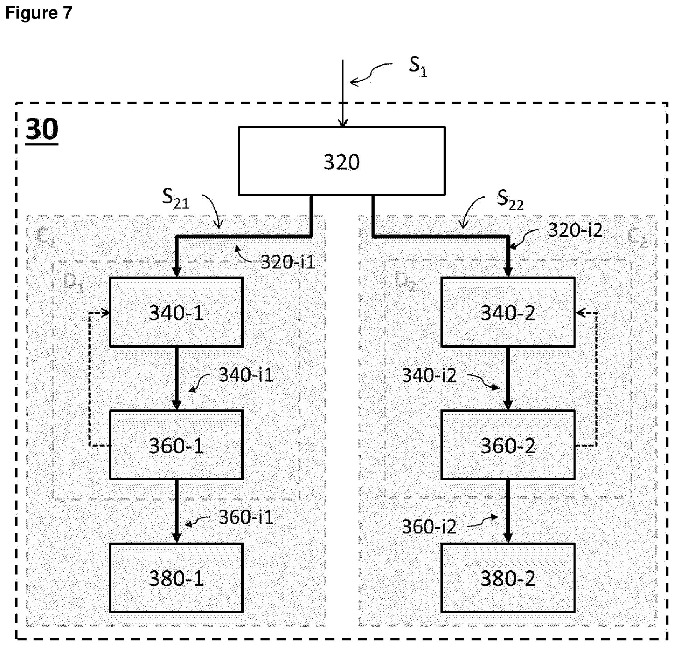

Les figures 7, 8 et 9 représentent schématiquement le récepteur 30, selon des modes de réalisation. Dans ces modes de réalisation, le récepteur comprend un séparateur de faisceaux 320 et deux chaînes de traitement $C_1$ et $C_2$.

Le séparateur de faisceau 320 (encore appelé 'unité de séparation de faisceau') est configuré pour séparer le signal multiplexé $S_1$ transmis par l'émetteur 10 en deux composantes de signal, notées $S_{21}$ et $S_{22}$, chaque composante de signal ainsi obtenue traversant respectivement l'une des deux chaînes de traitement $C_1$ ou $C_2$. Dans la suite de la description et dans les figures, l'indice 'x' est l'indice associé à une des deux chaînes de traitement du récepteur 30 et peut être un entier égal à 1 ou à 2. Les deux chaînes de traitement $C_1$ ou $C_2$ sont ainsi désignées généralement par la notation $C_x$.

Dans des modes de réalisation, le séparateur de faisceau 320 peut être un coupleur optique symétrique (par exemple en Y fibré de type 50/50) disposé par exemple en entrée du récepteur 30. Un tel coupleur optique peut être notamment un coupleur à maintien de polarisation. Le séparateur de faisceau 320 peut ainsi être configuré pour fournir deux composantes de signal $S_{21}$ et $S_{22}$ du signal multiplexé $S_1$, d'impulsions à intensité égale, composées chacune de 50% de la puissance optique du premier signal de contrôle $R_{11}$ de la première valeur d'encodage en polarisation $P_1$, et de 50% de la puissance optique du deuxième signal de contrôle $R_{12}$ de la deuxième valeur d'encodage en polarisation $P_2$.

Par ailleurs, le signal $S_{Q1}$ étant un signal quantique, le séparateur de faisceau 320 est configuré pour diriger (ou router) le signal quantique encodé en polarisation $S_{Q1}$ issu du signal multiplexé $S_1$ vers une des deux chaînes de traitement $C_x$ (i.e. $C_1$ ou $C_2$) du récepteur 30.

Chaque chaîne de traitement $C_x$ comprend un module de détection (généralement noté 380-x tel que les modules de détection 380-1 ou 380-2) adapté pour mesurer le signal quantique $S_{Q1}$ selon au moins un état de polarisation défini dans une base de polarisation prédéfinie (une 'base d'encodage en polarisation' dans l'émetteur 10, ou une 'base de décodage en polarisation' dans le récepteur 30). Chaque chaîne de traitement $C_x$ comprend également un dispositif de correction, généralement noté $D_x$ (tel que $D_1$ ou $D_2$ sur la figure 7), adapté pour déterminer l'état de polarisation du signal de contrôle associé à la base de polarisation de la chaîne considérée. Le dispositif de correction $D_x$ est en outre apte à corriger l'état de polarisation des signaux composant la composante $S_{2x}$ (et en particulier du signal quantique $S_{Q1}$) traversant la chaîne de traitement $C_x$, en fonction de l'état de polarisation déterminé du signal de contrôle, de manière à aligner cet état de polarisation corrigé avec un état de polarisation (notamment $P_x$) de la base de polarisation de détection du signal quantique prédéfini via le module de détection 380-x.

Tel qu'utilisé ici, l'expression 'alignement d'un état de polarisation sur une base de polarisation' fait référence à une rotation de l'état de polarisation d'un signal pour qu'il corresponde à un axe propre de détection de la base déterminée par un équipement de détection du signal quantique.

A titre d'illustration, la chaîne de traitement $C_1$ peut être associée au traitement des signaux selon la base déterminée par la polarisation $P_1$ (ou par les polarisations $P_1$ et $P_3$, définies par exemple et sans limitation sur la base diagonale D/A) et la chaîne de traitement $C_2$ peut être associée au traitement des signaux selon la base déterminée par la polarisation $P_2$ (ou par les polarisations $P_2$ et $P_4$, définies exemple et sans limitation sur la base rectiligne H/V).

Ainsi, pour chaque chaîne de traitement $C_x$, le dispositif de correction $D_x$ peut comprendre une boucle d'asservissement entre un module de correction d'état de polarisation et un module de détection 360-x d'un signal de contrôle $R_{1x}$.

Un module de correction du récepteur 30 peut être configuré pour modifier la polarisation d'un signal le traversant, en réponse à un signal de consigne. Un tel signal de consigne peut être un signal électrique ou radiofréquence par exemple. Avantageusement, un module de correction du récepteur 30 peut être un contrôleur de polarisation fibré comprenant notamment une ou plusieurs fibres à rotation de polarisation dont le ou les axes de contrainte (adaptés pour faire tourner la polarisation du signal) sont contrôlés (ou ajustés) à partir du signal de consigne. Par exemple et sans limitation, un tel axe de contrainte contrôlable peut être implémenté sous la forme d'un composant fibré enroulé de géométrie ajustable, ou à l'aide d'un élément piézoélectrique induisant des contraintes mécaniques que une fibre. Alternativement, un module de correction peut comprendre une ou plusieurs lames à retard dites actives, c'est à dire dont la rotation de lame (i.e. de son axe optique) est contrôlée (ou ajustée) à partir du signal de consigne.

Dans des modes de réalisation, le récepteur 30 peut comprendre deux modules de correction distincts, 340-1 et 340-2 (et généralement noté 340-x), chaque module étant associé à la correction de polarisation des signaux le traversant. En particulier, un module de correction 340-x peut être agencé pour corriger la polarisation des signaux constituant la composante $S_{2x}$ associée au dispositif de correction $D_x$ (selon l'état de polarisation $P_x$ spécifique par exemple). Alternativement, le récepteur 30 peut comprendre un unique module de correction 340-0 agencé pour corriger simultanément la polarisation des signaux composant la composante $S_{21}$ du dispositif de correction $D_1$ et la polarisation des signaux composant la composante $S_{22}$ du dispositif de correction $D_2$ (selon les états de polarisation $P_1$ et $P_2$ respectivement par exemple)

Pour chaque chaîne de traitement $C_x$, un module de correction (340-x ou 340-0) peut être agencé en amont du module de détection 360-x, et le module de détection 360-x peut être agencé en aval du séparateur de faisceau 320.

Dans des modes de réalisation, les deux modules de correction 340-1 et 340-2 des deux chaînes de traitement du récepteur peuvent être positionnés en aval du séparateur de faisceau 320, comme représenté sur la figure 7.

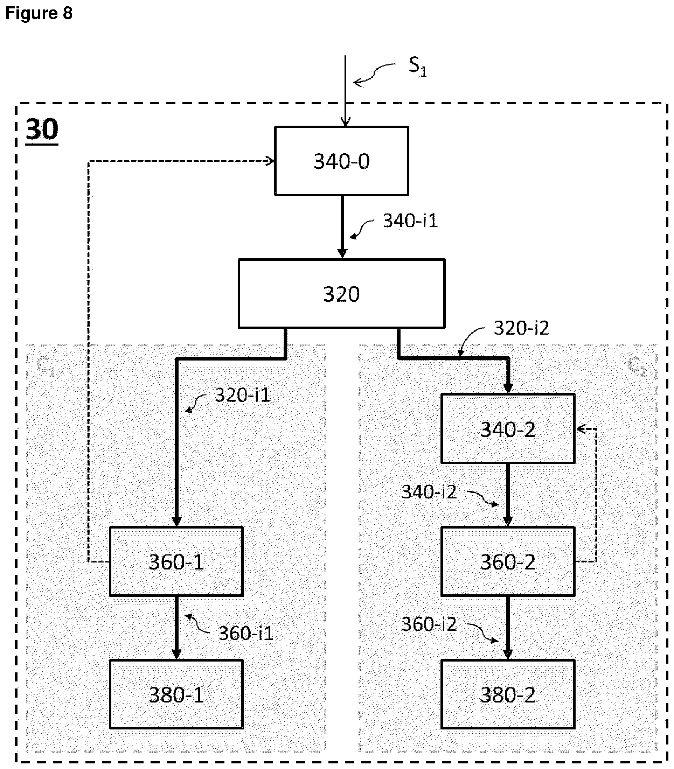

Dans certains modes de réalisation, un des deux modules de correction 340-1 (ou 340-2) du dispositif de correction correspondant $D_1$ (ou respectivement $D_2$) peut être positionné en amont du séparateur de faisceau 320, tandis que l'autre module de correction 340-2 (ou respectivement 340-1) peut être positionné en aval du séparateur de faisceau 320, comme représenté sur la figure 8.

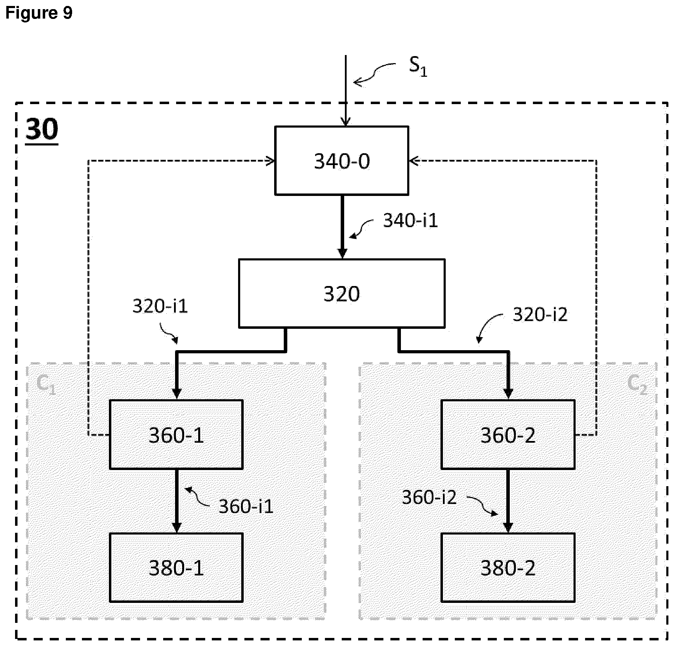

Dans des modes de réalisation où le récepteur 30 comprend un unique module de correction 340-0, associé aux deux dispositifs de correction $D_1$ et $D_2$, le module peut être positionné en amont du séparateur de faisceau 320, comme représenté sur la figure 9. Dans ce cas, le module de correction 340-0 peut être un triplé de lames à retard active comprenant successivement une lame quart d'onde, une lame demi-onde et une lame quart d'onde. Dans ce cas également, le séparateur de faisceau 320 peut comprendre en outre une lame à retard dite passive en sortir de coupleur, la lame étant positionnée sur une des voies optiques issues du coupleur et transportant une des deux composantes de signal $S_{21}$ ou $S_{22}$, déterminée à partir du signal multiplexé $S_1$.

Les moyens de transmission 320-ix en sortie du séparateur de faisceau 320 et les moyens de transmission 340-ix en sortie des unités de correction de la polarisation 340-x peuvent être des fibres optiques monomodes SMF. Avantageusement, ces moyens de transmission peuvent être des fibres à maintien de polarisation PMF.

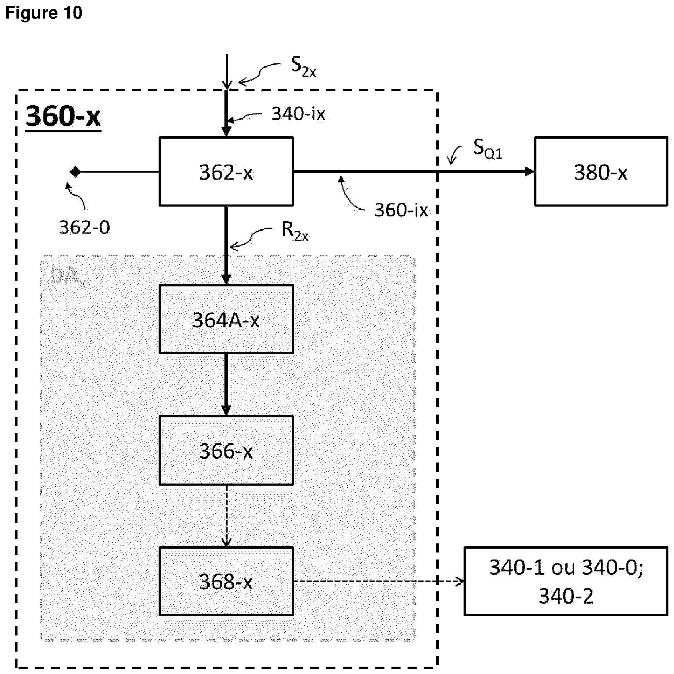

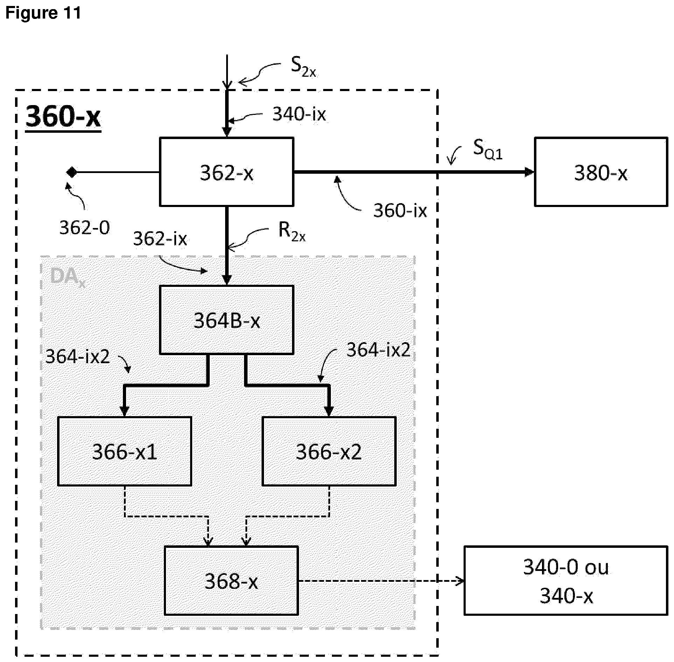

Les figures 10 et 11 représentent schématiquement un module de détection 360-x d'un signal de contrôle $R_{1x}$ comprenant une unité de démultiplexage de signaux 362-x et un dispositif d'analyse $DA_x$ de polarisation du signal intégré de contrôle $R_{1x}$, selon des modes de réalisation de l'invention.

L'unité de démultiplexage de signaux 362-x (i.e. 362-1 ou 362-2) reçoit en entrée la composante de signal $S_{2x}$ issu du signal multiplexé $S_1$ en sortie du module de correction 340-x et/ou du séparateur de faisceau 320. L'unité de démultiplexage 362-x peut être configurée pour séparer du signal $S_{2x}$, le signal quantique $S_{Q1}$, la composante notée $R_{11}$ du premier signal de contrôle $R_{11}$ et la composante notée $R_{21}$ du deuxième signal de contrôle $R_{12}$. Le signal quantique $S_{Q1}$ démultiplexé du signal $S_{2x}$ en sortie de l'unité 362-x est alors acheminé au module de détection 380-x de la chaîne de traitement $C_x$. Une des deux composantes du signal de contrôle, notée $R_{2x}$ ($R_{21}$ ou $R_{22}$), est alors traitée par la chaîne $C_x$, tandis que l'autre composante du signal de contrôle ($R_{22}$ ou respectivement $R_{21}$) n'est pas utilisée (par exemple et sans limitation, une telle composante peut alors être dirigée vers un absorbeur de faisceau 362-0 comme représenté sur les figures 10 et 11).

L'unité de démultiplexage de signaux 362-x peut notamment comprendre un ou plusieurs éléments de démultiplexage déterminés en fonction du type de multiplexage du signal $S_1$, c'est-à-dire fréquentiel et/ou temporel.

Dans des modes de réalisation où le signal multiplexé $S_1$ est multiplexé fréquentiellement, l'unité de démultiplexage de signaux 362-x peut comprendre un premier filtre $F_1$ configuré pour séparer le signal quantique $S_{Q1}$ des deux composantes de signal intégré de contrôle ($R_{21}$ et $R_{22}$), et un deuxième filtre $F_2$ configuré pour séparer entre elles les deux composantes de signal intégré de contrôle ($R_{21}$ et $R_{22}$). Par exemple et sans limitation, de tels filtres peuvent être des filtres de rejet de bande tels que des filtres FBG (acronyme pour l'expression anglo-saxonne *Fiber Bragg Grating*) ou un filtre appelé « Add/Drop WDM ». Le premier filtre $F_1$ peut être choisi à partir de la différence fréquentielle prédéterminée entre la longueur d'onde quantique $\lambda_Q$ et les longueurs d'onde de référence ($\lambda_{R1}$ et/ou $\lambda_{R2}$), et définie par exemple par l'équation (01). Similairement, le deuxième filtre $F_2$ peut être choisi à partir de la différence fréquentielle prédéterminée entre les longueurs d'onde de référence ($\lambda_{R1}$ et/ou $\lambda_{R2}$) de chacun des signaux de référence $R_{01}$ et $R_{02}$, et définie par exemple par l'équation (02).

Les moyens de transmission 360-ix et 362-ix en sortie de l'unité de démultiplexage de signaux 362-x vers le module de détection 380-x et le dispositif d'analyse $DA_x$ respectivement, ainsi que les moyens de transmission inclus dans l'unité 362-x (non représentés sur les figures), peuvent être des fibres optiques monomodes SMF. Avantageusement, ces moyens de transmission peuvent être des fibres à maintien de polarisation PMF.

Un dispositif d'analyse $DA_x$ (i.e. $DA_1$ ou $DA_2$) de polarisation du signal de contrôle $R_{1x}$ peut être configuré pour détecter la composante de signal de contrôle $R_{2x}$ à traiter par la chaîne $C_x$, selon une base de polarisation prédéfinie, de manière à fournir le signal de contrôle estimé $R_{3x}$ (c'est-à-dire, $R_{31}$ ou $R_{32}$).

Il est à noter qu'en sortie de l'émetteur 10, le signal de contrôle $R_{1x}$ est généré dans l'émetteur 10 selon un état de polarisation $P_n$ bien défini. Au cours de la propagation du signal entre le l'émetteur 10 et le récepteur 30, l'état de polarisation du signal de contrôle $R_{1x}$ peut avoir subi des rotations aléatoires de sorte que l'état de polarisation de la composante de signal de contrôle $R_{2x}$, relative au signal de contrôle $R_{1x}$ et détectée par le récepteur 30, peut être différente de l'état de polarisation $P_n$ initialement défini.

Ainsi, le dispositif d'analyse $DA_x$ de polarisation du signal de contrôle $R_{1x}$ peut comprendre au moins une unité de détection configurée pour détecter des signaux, notamment selon une polarisation prédéfinie, de manière à fournir l'estimation du signal de contrôle reçu $R_{3x}$ (c'est-à-dire, $R_{31}$ ou $R_{32}$).

Dans des modes de réalisation, une unité de détection du dispositif d'analyse $DA_x$ peut être adaptée pour détecter des signaux d'impulsions lumineuses classiques. Par exemple et sans limitation, une telle unité peut être une photodiode configurée pour délivrer un photo-courant, en fonction de la mesure de la composante de signal de contrôle $R_{2x}$ reçu associé à la chaîne de traitement $C_x$.

Alternativement, une unité de détection du dispositif d'analyse $DA_x$ peut être une unité de détection de photons uniques. Une telle unité peut être composée d'une surface de détection configurée pour détecter la « présence » de photons uniques au niveau de sa surface de détection (i.e. par interaction photon/surface). Cette détection de la présence de photons uniques est définie selon une efficacité quantique de détection donnée. Par exemple et sans limitation, l'unité de détection de photons uniques peut être une photodiode à avalanche ou APD (acronyme pour l'expression anglo-saxonne correspondante *Avalanche Photodiode Detector*) ou encore un détecteur de photons uniques à nanofil supraconducteur ou SNSPD (acronyme pour l'expression anglo-saxonne correspondante *Superconducting Nanowire Single Photon Detector*). En particulier, l'unité de détection de photons uniques peut comprendre un mécanisme d'amplification interne configuré pour délivrer une tension, lorsque qu'un photon est détecté.

Dans certains modes de réalisation, le dispositif d'analyse $DA_x$ peut comprendre un polariseur 364A-x et une unique unité de détection 366-x du signal de contrôle $R_{1x}$, comme représenté sur la figure 10. Le polariseur 364A-x (encore appelé 'filtre polarisant') peut être agencé pour transmettre à l'unité de détection 366-x uniquement les signaux optiques définis dans l'état de polarisation $P_x$. L'unité de détection 366-x associée est ainsi configurée pour détecter l'énergie lumineuse relative à la composante de signal intégré de contrôle $R_{2x}$ défini selon l'état de polarisation $P_x$ uniquement pour fournir l'estimation du signal de contrôle reçu $R_{3x}$. Selon cette configuration, la valeur du signal de contrôle $R_{3x}$ détectée (ou mesurée) par l'unité de détection 366-x est maximale si l'état de polarisation de la composante de signal de contrôle $R_{2x}$ est égale à l'état de polarisation $P_x$ du signal de contrôle $R_{1x}$. Inversement, la valeur du signal de contrôle $R_{3x}$ est minimale si l'état de polarisation de la composante de signal de contrôle $R_{2x}$ est orthogonal par rapport à l'état de polarisation $P_x$ du signal de contrôle $R_{1x}$.

Avantageusement, le dispositif d'analyse $DA_x$ peut comprendre une unité de détection polarisante regroupant directement (i.e. combinant) les fonctionnalités du polariseur 364A-x et de l'unité de détection 366-x.

Dans des modes de réalisation, le dispositif d'analyse $DA_x$ peut comprendre une unité de séparation 364B-x de faisceaux polarisés, précédée de deux unités de détection 366-x1 et 366-x2, comme représenté sur la figure 11. L'unité de séparation 364B-x de faisceaux polarisés (encore appelé 'séparateur polarisant') est adaptée pour fournir deux sous-composantes polarisées de signal relative à la composante du signal de contrôle $R_{2x}$, chaque sous-composante se propageant sur un moyen de transmission (364-ix1 ou 364-ix2) en sortie de l'unité de séparation 364B-x vers une des unité de détection (366-x1 ou 366-x2) et est définie uniquement dans un des deux états de polarisation prédéfinies de la base de polarisation, traitée par la chaîne de traitement $C_x$ et comprenant notamment l'état de polarisation $P_x$. Chaque unité de détection (366-x1 et 366-x2) est ainsi configurée pour détecter l'énergie lumineuse relative à une des deux sous-composantes polarisées pour fournir le signal de contrôle estimé $R_{3x}$. Par exemple et sans limitation, selon cette configuration, la valeur relative au signal de contrôle estimé $R_{3x}$, mesurée par la première unité de détection 366-x1, peut être maximale et la valeur relative au signal intégré $R_{3x}$, mesurée par la deuxième unité de détection 366-x2, peut être minimale, si l'état de polarisation de la composante de signal de contrôle $R_{2x}$ est égale à l'état de polarisation $P_x$ du signal de contrôle $R_{1x}$. Inversement, la valeur relative au signal de contrôle estimé $R_{3x}$, mesurée par l'unité de détection 366-x, peut être minimale et la valeur relative au signal de contrôle estimée $R_{3x}$, mesurée par la deuxième unité de détection 366-x2, peut être maximale, si l'état de polarisation de la composante de signal de contrôle $R_{2x}$ est orthogonal à l'état de polarisation $P_x$ du signal de contrôle $R_{1x}$.

Par exemple, pour la chaîne de traitement $C_1$, le dispositif $DA_1$ d'analyse de polarisation de la composante du signal de contrôle $R_{21}$ reçu associé à la base diagonale (D/A) peut comprendre une unité de séparation 364B-1 configurée pour fournir une première sous-composante ayant une polarisation linéaire $P_1$, de type diagonal D se propageant sur le moyen de transmission 364-i11, et une deuxième sous-composante ayant une polarisation linéaire $P_3$, de type anti-diagonal A se propageant sur le moyen de transmission 364-i12. Dans cet exemple, les deux unités de détection 366-11 et 366-12 correspondantes sont donc configurées pour détecter respectivement la sous-composante relative à la polarisation linéaire $P_1$ du signal de contrôle $R_{21}$ reçu et la sous-composante relative à la polarisation linéaire $P_3$ du signal de contrôle $R_{21}$ reçu.

Dans certains modes de réalisation, la ou les unités de détection (366-x, ou 366-x1 et 366-x2) de la chaîne de traitement $C_x$ peuvent être adaptées à la longueur d'onde de référence $\lambda_{Rx}$ (i.e. $\lambda_{R1}$ ou $\lambda_{R2}$) de la composante de signal de contrôle $R_{2x}$ à détecter.

Le récepteur 30 peut en outre comprendre un ou plusieurs processeurs (encore appelés 'unités centrales de calcul') ou CPU (acronyme pour l'expression anglo-saxonne *Central Processing Unit*).

Dans des modes de réalisation, chaque dispositif d'analyse $DA_x$ peut comprendre un processeur spécifique, généralement noté 368-x (i.e. 368-1 et 368-2) configuré pour analyser le ou les signaux électriques issus de la ou des unités de détection (366-x, ou 366-x1 et 366-x2) et correspondant au signal de contrôle estimé $R_{3x}$. Un processeur 368-x peut être configuré pour générer un signal d'asservissement, noté $S_{C36-x}$, correspondant à un signal de consigne de correction de polarisation à délivrer au module de correction 340-x associé à la chaîne de traitement $DA_x$.

Dans certains modes de réalisation, le récepteur 30 peut comprendre un unique processeur 368, configuré pour analyser l'ensemble des signaux électriques issus des unités de détection des dispositifs d'analyse $DA_1$ et $DA_2$, et correspondant aux signaux de contrôle estimés $R_{31}$ et $R_{32}$. Le processeur 368 peut être configuré pour générer un ou plusieurs signaux d'asservissement, $S_{C36}$ ou $S_{C36-x}$. Un signal d'asservissement $S_{C36}$ généré par l'unique processeur 368 peut correspondre, par exemple, au signal de consigne de correction de polarisation à délivrer au module de correction unique 340-0.

Une boucle d'asservissement associée à un ou au deux dispositifs de correction (i.e. une boucle de correction de polarisation générant un signal d'asservissement) peut être mise en œuvre de manière continue ou de manière intermittente. Un processeur (368-x ou 368) peut ainsi être configuré pour contrôler la ou les boucles d'asservissement du récepteur 30. En particulier, une boucle d'asservissement peut être activée de manière périodique et/ou après évaluation de l'état de polarisation d'un ou des deux signaux de contrôle estimés par rapport à un ou plusieurs états de polarisation de base(s) de polarisation associée(s). Par ailleurs, une boucle d'asservissement peut être mise en œuvre jusqu'à alignement de l'état de polarisation d'un ou des deux signaux de contrôle estimés sur l'état de polarisation choisi (ou de référence) associé.

Dans des modes de réalisation, un processeur du récepteur 30 peut être configuré pour déterminer, pour un dispositif de correction $D_x$ spécifique, une valeur de différence d'état de polarisation $\delta P_x$ entre l'état de polarisation du signal de contrôle estimé $R_{3x}$ et l'état de polarisation $P_x$ de la base de polarisation associée. Le processeur peut en outre être configuré pour évaluer si cette valeur différence d'état de polarisation $\delta P_x$ est strictement supérieure (ou supérieur ou égale) à une valeur de différence de référence $\delta P_{ref}$ prédéfinie.

En particulier, une boucle d'asservissement peut être activée si une valeur différence d'état de polarisation $\delta P_x$ déterminée est supérieure ou égale à la valeur de différence de référence $\delta P_{ref}$.

Avantageusement, une boucle d'asservissement peut être mise en œuvre de manière à optimiser (c'est-à-dire maximiser ou minimiser) la détection de la composante du ou des signaux de contrôle selon le ou les états de polarisation associés.

Par exemple et sans limitation, un signal d'asservissement d'une boucle d'asservissement peut être généré à partir d'un algorithme d'optimisation différentiable, tel qu'un algorithme de descente du gradient, de manière à rechercher (par incrémentation ou itération) un point optimal d'une fonction objective associée notamment à la ou aux valeurs de différence d'état de polarisation déterminées d'un dispositif de correction $D_x$ ou des deux dispositifs de correction du récepteur. Si un point optimal est trouvé, la boucle d'asservissement peut être arrêtée.

La boucle d'asservissement peut également être arrêtée, par exemple et sans limitation, si une valeur différence d'état de polarisation $\delta P_x$ déterminée est strictement inférieure (ou inférieure ou égale) à la valeur de différence de référence $\delta P_{ref}$.

Ainsi, dans des modes de réalisation, un signal d'asservissement $S_{C36-x}$ relatif au signal de consigne d'un module de correction 340-x peut être généré pour contrôler ledit module 340-x et notamment faire tourner la polarisation de la composante de signal $S_{2x}$ jusqu'à ce que la valeur du signal de contrôle estimé $R_{3x}$, mesurée par l'unité de détection 366-x (ou la première unité de détection 366-x1), soit optimale, c'est-à-dire que l'état de polarisation de la composante de signal de contrôle $R_{2x}$ soit alors égale à l'état de polarisation $P_x$ du signal de contrôle $R_{1x}$ ou orthogonale à celle-ci. La modification de la polarisation de la composante de signal $S_{2x}$ via le signal d'asservissement $S_{C36-x}$ induit ainsi une modification de l'état de polarisation du signal quantique $S_{Q1}$ démultiplexé du signal $S_{2x}$, en sortie de l'unité 362-x, et acheminé au module de détection 380-x de la chaîne de traitement $C_x$.

Dans certains modes de réalisation, un signal d'asservissement $S_{C36}$ relatif à un signal de consigne à délivrer au module de correction unique 340-0, peut être généré pour contrôler ledit module 340-0 et notamment faire tourner la polarisation des deux composantes de signal $S_{21}$ et $S_{22}$ jusqu'à ce que les deux valeurs des signaux de contrôle estimés $R_{31}$ et $R_{32}$, mesurées par des unités de détection 366-1 et 366-2 (ou les premières unités de détection 366-11 et 366-21), soient optimales, c'est-à-dire que les états de polarisation des composantes de signal de contrôle $R_{21}$ et $R_{22}$ soient respectivement égales aux états de polarisation $P_1$ et $P_2$ des signaux de contrôle $R_{11}$ et $R_{12}$ (ou orthogonales à celles-ci).

Pour chaque chaîne de traitement $C_x$, le module de détection du signal quantique 380-x comprend au moins une unité de détection de photons uniques. La détection du signal quantique encodé en polarisation $S_{Q1}$ sur l'ensemble des unités de détection de photon des chaînes de traitement (i.e. $C_1$ et $C_2$) du récepteur 30 permet de fournir le signal quantique reçu estimé $S_{Q3}$ et ainsi une estimation de l'encodage en polarisation du signal quantique sur les états d'encodage prédéterminés.

Dans certains modes de réalisation, comme par exemple dans des modes où le signal quantique $S_{Q1}$ est encodé sur un ensemble P de deux états de polarisation possibles uniquement, $P_1$ ou $P_2$ (i.e. défini selon une base de polarisation simplifié), le module de détection du signal quantique 380-x d'une chaîne de traitement $C_x$ peut comprendre une unique unité de détection de photons uniques 386-x configurée pour détecter le signal quantique $S_{Q1}$ défini selon ledit état de polarisation $P_x$.

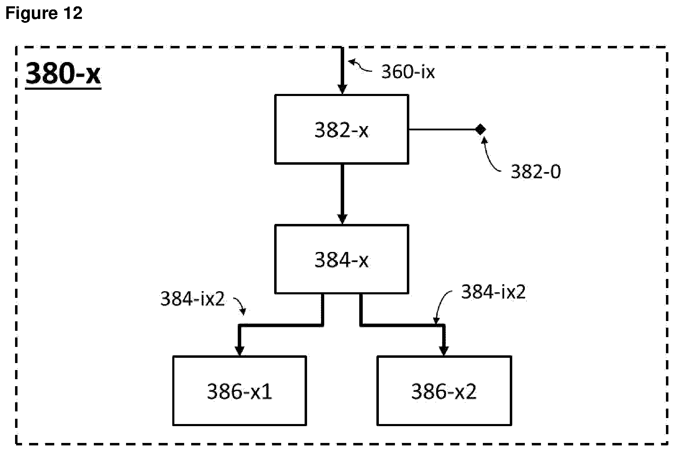

Dans d'autres modes de réalisation, comme dans les cas où le signal quantique $S_{Q1}$ est encodé sur un ensemble P de quatre états de polarisation possibles, $P_1$, $P_2$, $P_3$ ou $P_2$ (i.e. défini selon les bases de polarisation D/A et H/V par exemple), le module de détection du signal quantique 380-x peut comprendre une unité de commutation 384-x, précédée de deux unités de détection de photons uniques 386-x1 et 386-x2, comme représenté sur la figure 12. L'unité de commutation 384-x peut être assimilée à l'unité de séparation 364B-x de faisceaux polarisés du dispositif d'analyse $DA_x$. L'unité de commutation 384-x peut donc être adaptée pour diriger (i.e. router ou commuter) le signal quantique $S_{Q1}$ démultiplexé du signal $S_{2x}$ vers une des deux unités de détection de photons uniques (386-x1 ou 386-x2) en fonction de l'état de polarisation du signal quantique. Chaque unité de détection de photons uniques (386-x1 et 386-x2) est ainsi configurée pour détecter la présence de photons uniques définis dans un des états de polarisation prédéfinies de la base de polarisation, traitée par la chaîne de traitement $C_x$ et comprenant notamment l'état de polarisation $P_x$.

A titre d'illustration, pour la chaîne de traitement $C_1$, le module de détection du signal quantique 380-1 associé, par exemple et sans limitation, à la base diagonale D/A, peut comprendre l'unité de commutation 384-1 configurée pour diriger le signal quantique $S_{Q1}$ ayant une polarisation linéaire $P_1$, de type diagonal D, vers une première unité de détection de photons uniques 386-11 via le moyen de transmission 384-i11, ou pour diriger le signal quantique $S_{Q1}$ ayant une polarisation linéaire $P_3$, de type anti-diagonal A, vers une deuxième unité de détection de photons uniques 386-12 via le moyen de transmission 384-i12. De manière équivalente, pour la chaîne de traitement $C_2$, le module de détection du signal quantique 380-2 associé, par exemple à la base diagonale H/V, peut comprendre l'unité de commutation 384-2 configurée pour diriger le signal quantique $S_{Q1}$ ayant une polarisation linéaire $P_2$, de type diagonal H, vers l'unité de détection de photons uniques 386-21 via le moyen de transmission 384-i21, ou pour diriger le signal quantique $S_{Q1}$ ayant une polarisation linéaire $P_4$, de type anti-diagonal V, vers l'unité de détection de photons uniques 386-22 via le moyen de transmission 384-i22.

Dans des modes de réalisation, le module de détection du signal quantique 380-x peut comprendre en entrée une unité de démultiplexage supplémentaire 382-x, assimilable à l'unité de démultiplexage de signaux 362-x du module de détection 360-x, et configuré pour transmettre le signal quantique $S_{Q1}$ à l'unité de détection de photons uniques 386-x, ou à l'unité de commutation 384-x, comme représenté sur la figure 12. Les composantes résiduelles des signaux de contrôle sont alors dirigées vers un absorbeur de faisceau 382-0 comme représenté sur la figure 12.

L'unité de démultiplexage supplémentaire 382-x du module 380-x peut notamment comprendre un élément de démultiplexage déterminé en fonction du type de multiplexage du signal $S_1$. Par exemple, pour un multiplexage fréquentiel, l'unité de démultiplexage supplémentaire 382-x peut être un filtre spectral configuré pour séparer le signal quantique $S_{Q1}$ des deux composantes résiduelles des signaux intégrés, tels qu'un filtre FBG ou un filtre « Add/Drop WDM », et choisi à partir de la différence fréquentielle prédéterminée entre la longueur d'onde quantique $\lambda_Q$ et les longueurs d'onde de référence ($\lambda_{R1}$ et/ou $\lambda_{R2}$).

Une telle unité de démultiplexage supplémentaire 382-x permet notamment d'augmenter la capacité de filtrage des signaux de contrôle $R_{11}$ et $R_{12}$ afin d'améliorer la mesure quantique effectuée par le module de détection du signal quantique 380-x.

Dans des modes de réalisation, par exemple dans des modes où les signaux de contrôle $R_{11}$ et $R_{12}$ sont des signaux quantiques et où le signal multiplexé $S_1$ peut être multiplexé temporellement, un dispositif de correction $D_x$ peut comprendre un module de correction d'état de polarisation et un module de détection du signal quantique 380-x. Dans ce cas, le module de détection du signal quantique 380-x peut être configuré pour détecter le signal quantique $S_{Q1}$, ainsi que le signal de contrôle $R_{1x}$ associé au dispositif de correction $D_x$. Un tel module 380-x peut alors comprendre une unité de commutation 384-x correspondant à une unité de séparation de faisceaux polarisés, au moins une unité de détection de photons uniques 386-x et un processeur (assimilé à une unité centrale de calcul 368-x ou 368) configuré pour générer le ou les signaux d'asservissement correspondant aux signaux de consigne de correction de polarisation à délivrer au(x) module(s) de correction associés.

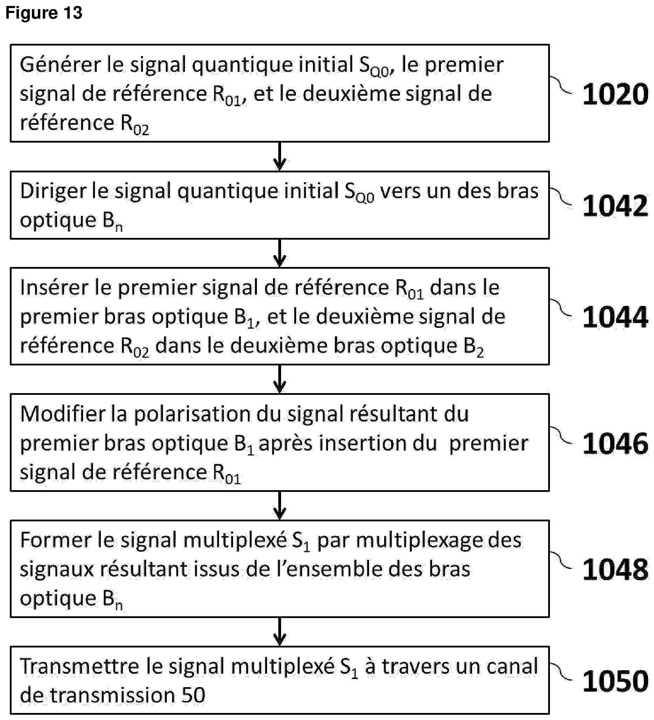

La figure 13 représente le procédé d'émission d'un signal multiplexé $S_1$ mis en œuvre par l'émetteur 10, selon des modes de réalisation de l'invention.

Le procédé d'émission comprend une étape préliminaire 1020 de génération d'un signal quantique initial $S_{Q0}$, ainsi qu'un premier signal de référence $R_{01}$, et d'un deuxième signal de référence $R_{02}$.

A l'étape 1042, le signal quantique initial $S_{Q0}$ est dirigé vers un des bras optique $B_n$ de l'émetteur 10.

A l'étape 1044 (équivalent à deux sous-étapes distinctes 1044-1 et 1044-2), le premier signal de référence $R_{01}$ est inséré dans un premier bras optique $B_1$ et le deuxième signal de référence $R_{02}$ est inséré dans un deuxième bras optique $B_2$ parmi les bras optiques de l'émetteur 10.

A l'une des sous-étapes d'insertion 1044-1 ou 1044-2, le premier signal de référence $R_{01}$ ou le deuxième signal de référence $R_{02}$ peut être multiplexé avec le signal quantique initial $S_{Q0}$, en fonction du routage du signal quantique initial $S_{Q0}$ dans l'un des bras optiques $B_n$ effectué à l'étape 1042.

A l'étape 1046, une modification de polarisation est appliquée au signal optique traversant le premier bras optique $B_1$ (c'est-à-dire le multiplexage du premier signal de référence $R_{01}$ et du signal quantique initial $S_{Q0}$, ou bien uniquement le premier signal de référence $R_{01}$, en fonction du routage du signal quantique initial $S_{Q0}$), ce qui génère un encodage selon une première valeur d'encodage en polarisation $P_1$.

A l'étape 1048, l'ensemble des signaux résultant issus des bras optiques $B_n$ de l'émetteur 10 sont recombinés pour former le signal multiplexé $S_1$ comprenant :

- un premier signal de contrôle $R_{11}$ de la première valeur d'encodage en polarisation $P_1$ déterminé à partir du premier signal de référence $R_{01}$ et issu du bras optique $B_1$,

- un deuxième signal de contrôle $R_{12}$ déterminé à partir du deuxième signal de référence $R_{02}$ et issu du deuxième bras optique $B_2$, le deuxième signal $R_{12}$ correspondant à un signal de contrôle d'une deuxième valeur d'encodage en polarisation $P_2$ associé au deuxième bras optique $B_2$, et

- un signal quantique $S_{Q1}$ encodé sur une valeur d'encodage en polarisation définie parmi un ensemble de valeurs P comprenant la première valeur d'encodage en polarisation $P_1$ et la deuxième valeur d'encodage en polarisation $P_2$.

A l'étape 1050, le signal multiplexé $S_1$ est transmis à travers un canal de transmission 50.

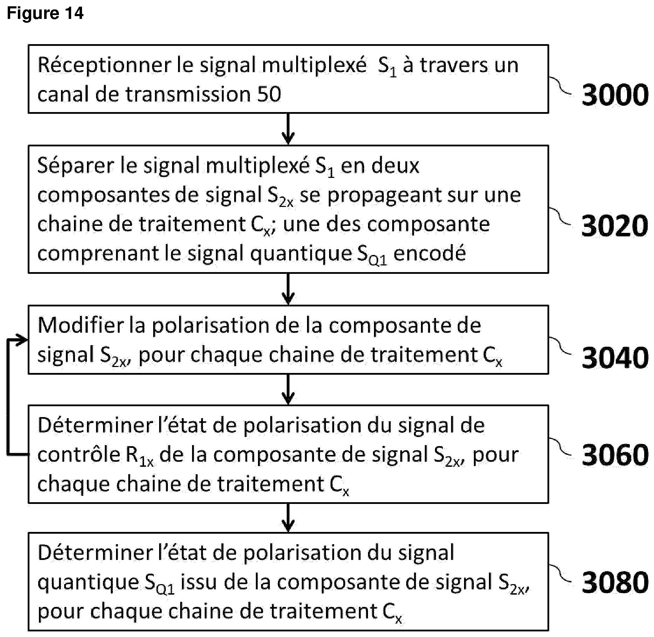

La figure 14 représente le procédé de réception d'un signal multiplexé $S_1$ réalisé par le récepteur 30, selon des modes de réalisation de l'invention.

Le procédé de réception comprend une étape préliminaire 3000 de réception d'un signal multiplexé $S_1$ transmis à travers un canal de transmission 50.

A l'étape 3020, le signal multiplexé $S_1$ est séparé en deux composantes de signal $S_{21}$ et $S_{22}$ (ou $S_{2x}$) comprenant chacune une composante du premier signal de contrôle $R_{11}$ et une composante du deuxième signal de contrôle $R_{12}$, chaque composante de signal $S_{2x}$ se propageant respectivement vers une des chaînes de traitement $C_x$ du récepteur 30. En outre, un signal quantique $S_{Q1}$ encodé compris dans le signal multiplexé $S_1$ est dirigé vers une des chaînes de traitement $C_x$.

Le procédé de réception comprend en outre, pour chaque chaîne de traitement $C_x$ associée à une base de polarisation prédéfinie, composée d'au moins de l'état en polarisation $P_x$, une boucle d'asservissement entre les étapes 3040 et 3060 ; l'étape 3060 correspond à la détermination de l'état de polarisation d'un signal de contrôle $R_{1x}$ de la composante de signal $S_{2x}$ parcourant la chaîne, et l'étape 3040 correspond à la modification de la polarisation de la composante de signal $S_{2x}$. La boucle d'asservissement entre les étapes 3040 et 3060 est arrêtée lorsque l'état de polarisation déterminé à l'étape 3060 est aligné par rapport à un des états de polarisation de la base de la chaîne $C_x$.

A l'étape 3080, l'état de polarisation du signal quantique $S_{Q1}$ encodé de la composante de signal $S_{2x}$ parcourant une des chaînes de traitement $C_x$ est déterminé.

L'homme du métier comprendra aisément que certaines étapes des procédés d'émission et de réception des figures 13 et 14 peuvent être réalisées respectivement de manière simultanée, séquentielle, indépendante ou non, et/ou selon un ordre différent, par exemple selon un ordre défini par l'émetteur et le récepteur respectivement.

Le système quantique ou les sous-systèmes du système (émetteur et récepteur), ainsi que les procédés décrits précédemment, selon les modes de réalisation de l'invention, peuvent être mis en œuvre de diverses manières par matériel (« hardware »), ou une combinaison de matériel et de logiciels, notamment sous la forme de code de programme pouvant être distribué sous la forme d'un produit de programme, sous diverses formes. Le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

L'invention n'est pas limitée aux modes de réalisation décrits ci-avant à titre d'exemple non limitatif. Elle englobe toutes les variantes de réalisation qui pourront être envisagées par l'homme du métier, dans la mesure où elles sont couvertes par la portée des revendications annexées.

**Revendications**

1. Emetteur (10) configuré pour transmettre un signal multiplexé ($S_1$) à travers un canal de transmission (50), où ledit émetteur (10) comprend :

   - un générateur de signaux (120) configuré pour générer un signal quantique initial ($S_{Q0}$), un premier signal de référence ($R_{01}$) et un deuxième signal de référence ($R_{02}$),
   - un encodeur en polarisation (140) comprenant une pluralité de N voies optiques ($B_n$), l'encodeur en polarisation (140) comprenant en outre :

     ∘ un sélectionneur optique (142) configuré pour sélectionner une desdites voies optiques ($B_n$) et pour diriger le signal quantique initial ($S_{Q0}$) généré vers la voie optique sélectionnée ($B_n$),
     ∘ un recombineur optique (148) configuré pour générer ledit signal multiplexé ($S_1$), le signal multiplexé comprenant un premier signal ($R_{11}$) de contrôle d'une première valeur d'encodage en polarisation ($P_1$), un deuxième signal ($R_{12}$) de contrôle d'une deuxième valeur d'encodage en polarisation ($P_2$), et un signal quantique ($S_{Q1}$) encodé sur une valeur d'encodage en polarisation choisie parmi un ensemble de valeurs ($P$) comprenant au moins ladite première valeur d'encodage en polarisation ($P_1$) et ladite deuxième valeur d'encodage en polarisation ($P_2$), ledit signal quantique encodé ($S_{Q1}$) étant déterminé à partir dudit signal quantique initial ($S_{Q0}$) délivré par la voie optique sélectionnée par ledit sélectionneur optique (142),

   et en ce que les voies optiques ($B_n$) comprennent une première voie optique ($B_1$) comprenant une première unité d'intégration (144-1) configurée pour intégrer ledit premier signal de référence ($R_{01}$) dans la première voie optique ($B_1$) et une deuxième voie optique ($B_2$) comprenant une deuxième unité d'intégration (144-2) configurée pour intégrer le deuxième signal de référence ($R_{02}$) dans la deuxième voie optique ($B_2$), ledit premier signal ($R_{11}$) de contrôle étant déterminé à partir du premier signal de référence ($R_{01}$) délivré par la première voie optique ($B_1$) au recombineur optique (148), et ledit deuxième signal ($R_{12}$) de contrôle étant déterminé à partir dudit deuxième signal de référence ($R_{02}$) délivré par la

deuxième voie optique ($B_2$) au recombineur optique (148).

2. Emetteur (10), selon la revendication 1, dans lequel chaque voie optique ($B_n$) dudit encodeur en polarisation (140) est associée à une valeur d'encodage en polarisation ($P_n$) dudit ensemble de valeurs (P), et dans lequel au moins une desdites voies optiques ($B_n$) comprend en outre un élément optique (146-n) configuré pour modifier la polarisation d'un signal optique parcourant ladite voie optique ($B_n$) selon la valeur d'encodage ($P_n$) associée.

3. Emetteur (10), selon l'une des revendications 1 ou 2, dans lequel ledit émetteur (10) est un dispositif tout-optique guidée, lesdites voies optiques ($B_n$) dudit encodeur en polarisation (140) étant formées à partir de fibres à maintien de polarisation (PMF) et/ou de guides d'onde intégrés.

4. Récepteur (30) configuré pour recevoir un signal multiplexé ($S_1$) à travers un canal de transmission (50), ledit signal multiplexé ($S_1$) comprenant un signal quantique encodé ($S_{Q1}$), un premier signal ($R_{11}$) de contrôle d'une première valeur d'encodage en polarisation ($P_1$) et un deuxième signal ($R_{12}$) de contrôle d'une deuxième valeur d'encodage en polarisation ($P_2$), où ledit récepteur (30) comprend un séparateur de faisceaux (320) configuré pour séparer ledit signal multiplexé ($S_1$) en deux composantes de signal ($S_{21}$ et $S_{22}$) comprenant chacune une composante dudit premier signal de contrôle ($R_{11}$) et une composante dudit deuxième signal de contrôle ($R_{12}$), chaque composante de signal ($S_{21}$ ; $S_{22}$) parcourant respectivement une chaîne de traitement ($C_1$ ; $C_2$) associée à une base de polarisation composée d'au moins un état en polarisation ($P_1$ ; $P_2$), une desdites composantes de signal ($S_{21}$ ou $S_{22}$) comprenant en outre ledit signal quantique encodé ($S_{Q1}$),
et en ce que chaque chaîne de traitement ($C_1$; $C_2$) comprend un dispositif de correction ($D_1$; $D_2$) adapté pour déterminer l'état de polarisation d'un signal intégré de contrôle ($R_{11}$ ; $R_{12}$) de ladite composante de signal ($S_{21}$, $S_{22}$) parcourant ladite chaîne, le dispositif de correction ($D_1$ ; $D_2$) étant en outre adapté pour modifier la polarisation de ladite composante de signal ($S_{21}$, $S_{22}$) de manière à aligner ledit état de polarisation déterminé par rapport à un desdits au moins un état en polarisation de ladite base associée, chaque chaîne de traitement ($C_1$; $C_2$) comprenant un module de détection (380-1 ; 380-2) adapté pour mesurer ledit signal quantique encodé ($S_{Q1}$) selon au moins un desdits au moins un état en polarisation de ladite base associée.

5. Récepteur (30), selon la revendication 4, dans lequel, pour chaque chaîne de traitement ($C_1$; $C_2$), ledit dispositif de correction ($D_1$; $D_2$) est configuré pour démultiplexer ladite composante de signal ($S_{21}$, $S_{22}$) pour sélectionner l'une desdites composantes de signal de contrôle ($R_{11}$ ; $R_{12}$) et l'acheminer vers un dispositif d'analyse ($DA_1$ ; $DA_2$) de polarisation comprenant au moins une unité de détection (366-x) et adapté pour détecter ladite composante sélectionnée de signal intégré de contrôle ($R_{11}$ ; $R_{12}$) selon un desdits au moins un état en polarisation de ladite base associée.

6. Récepteur (30), selon d'une des revendications 4 ou 5, dans lequel, pour chaque chaîne de traitement ($C_1$ ; $C_2$), ledit dispositif de correction ($D_1$ ; $D_2$) comprend en outre un processeur (368-1 ; 368-2) configuré pour analyser ledit état de polarisation déterminé et pour générer un signal d'asservissement ($S_{C36}$) appliqué à un module de correction (340-1 ; 340-2) de polarisation de ladite composante de signal ($S_{21}$, $S_{22}$).

7. Récepteur (30), selon d'une des revendications 4 à 6, dans lequel ledit séparateur de faisceaux (320) est un coupleur optique symétrique en Y fibré de type 50/50, et dans lequel lesdites chaînes de traitement ($C_1$ ; $C_2$) sont formées à partir de fibres à maintien de polarisation (PMF) et/ou de fibres optiques monomodes (SMF).

8. Système (1) de distribution quantique de clés de cryptage comprenant un émetteur (10) défini selon l'une des revendications 1 à 3 et un récepteur (30) défini selon l'une des revendications 4 à 7.

9. Système (1), selon la revendication 8, dans lequel ledit signal multiplexé ($S_1$) est un signal multiplexé fréquentiellement.

10. Système (1), selon la revendication 9, et dans lequel la valeur absolue de la différence de longueur d'onde entre ledit signal quantique encodé ($S_{Q1}$) et ledit premier et/ou ledit deuxième signal intégré ($R_{11}$ et/ou $R_{12}$) est supérieure ou égale à une première valeur minimale de différence de longueur d'onde ($\delta\lambda$), et dans lequel la valeur absolue de la différence de longueur d'onde entre ledit premier signal de contrôle ($R_{11}$) et ledit deuxième signal de contrôle ($R_{12}$) est supérieure ou égale à une deuxième valeur minimale de différence de longueur d'onde ($\delta\lambda'$).

**Patentansprüche**

1. Sender (10), konfiguriert, um ein multiplexiertes Signal ($S_1$) durch einen Übertragungskanal (50) zu übertragen, wobei der Sender (10) umfasst:

    - einen Signalgenerator (120), konfiguriert, um ein anfängliches Quantensignal ($S_{Q0}$), ein erstes Referenzsignal ($R_{01}$) und ein zweites Referenzsignal ($R_{02}$) zu generieren,

- einen Polarisierungs-Codierer (140), der eine Vielzahl von N optischen Wegen umfasst($B_n$), wobei der Polarisierungs-Codierer (140) weiter umfassen:

    - einen optischen Wähler (142), konfiguriert, um einen der optischen Wege ($B_n$) auszuwählen und um das generierte anfängliche Quantensignal ($S_{Q0}$) zum ausgewählten optischen Weg ($B_n$) zu leiten,
    - einen optischen Rekombinator (148), konfiguriert, um das multiplexierte Signal ($S_1$) zu generieren, wobei das multiplexierte Signal ein erstes Steuersignal ($R_{11}$) für einen ersten Polarisierungs-Codierwert ($P_1$), ein zweites Steuersignal ($R_{12}$) für einen zweiten Polarisierungs-Codierwert ($P_2$), und ein Quantensignal ($S_{Q1}$) umfasst, das mit einem Polarisierungs-Codierwert codiert ist, der aus einer Reihe von Werten ($\mathcal{P}$) ausgewählt ist, die mindestens den ersten Polarisierungs-Codierwert ($P_1$) und den zweiten Polarisierungs-Codierwert ($P_2$) umfassen, wobei das codierte Quantensignal ($S_{Q1}$) aus dem anfänglichen Quantensignal ($S_{Q0}$) bestimmt wird, das über den optischen Weg durch den optischen Wähler (142) abgegeben wird,

und dadurch, dass die optischen Wege ($B_n$) einen ersten optischen Weg ($B_1$) umfassen, der eine erste Integrationseinheit (144-1) umfasst, die konfiguriert ist, um das erste Referenzsignal ($R_{01}$) im ersten optischen Weg ($B_1$) zu integrieren, und einen zweiten optischen Weg ($B_2$), der eine zweite Integrationseinheit (144-2) umfasst, die konfiguriert ist, um das zweite Referenzsignal ($R_{02}$) im zweiten optischen Weg ($B_2$) zu integrieren, wobei das erste Steuersignal ($R_{11}$) aus dem ersten Referenzsignal ($R_{01}$) bestimmt wird, das über den ersten optischen Weg ($B_1$) dem optischen Rekombinator (148) abgegeben wird, und das zweite Steuersignal ($R_{12}$) aus dem zweiten Referenzsignal ($R_{02}$) bestimmt wird, das über den zweiten optischen Weg ($B_2$) dem optischen Rekombinator (148) abgegeben wird.

2. Sender (10), nach Anspruch 1, wobei jeder optische Weg ($B_n$) des Polarisierungs-Codierers (140) einem Polarisierungs-Codierwert ($P_n$) der Reihe von Werten ($\mathcal{P}$) zugeordnet wird, und wobei mindestens einer der optischen Wege ($B_n$) weiter ein optisches Element (146-n) umfasst, konfiguriert, um die Polarisierung eines optischen Signals zu modifizieren, das den optischen Weg ($B_n$) gemäß dem zugeordneten Codierwert ($P_n$) durchläuft.

3. Sender (10) nach einem der Ansprüche 1 oder 2, wobei der Sender (10) eine geleitete rein optische Vorrichtung ist, wobei die optischen Wege ($B_n$) des Polarisierungs-Codierers (140) aus Fasern zum Halten der Polarisierung (PMF) und/oder integrierten Wellenleitern gebildet sind.

4. Empfänger (30), konfiguriert, um ein multiplexiertes Signal ($S_1$) durch einen Übertragungskanal (50) zu empfangen, wobei das multiplexierte Signal ($S_1$) ein codiertes Quantensignal ($S_{Q1}$), ein erstes Steuersignal ($R_{11}$) eines ersten Polarisierungs-Codierwertes ($P_1$) und ein zweites Steuersignal ($R_{12}$) eines zweiten olarisierungs-Codierwertes ($P_2$) umfasst, wobei der Empfänger (30) einen Strahlentrenner (320) umfasst, der konfiguriert ist, um das multiplexierte Signal ($S_1$) in zwei Signalkomponenten ($S_{21}$ und $S_{22}$) zu trennen, die jeweils eine Komponente des ersten Steuersignalsignal ($R_{11}$) und eine Komponente des zweiten Steuersignals ($R_{12}$) umfasst, wobei jede Signalkomponente ($S_{21}$; $S_{22}$) jeweils eine Behandlungskette ($C_1$; $C_2$) durchläuft, die einer Polarisierungsbasis zugeordnet ist, die sich aus mindestens einem Polarisierungszustand ($P_1$; $P_2$), einer der Signalkomponenten ($S_{21}$ oder $S_{22}$) zusammensetzt, die weiter das codierte Quantensignal ($S_{Q1}$) umfasst,
und dadurch, dass die Behandlungskette ($C_1$; $C_2$) eine Korrekturvorrichtung ($D_1$; $D_2$) umfasst, die angepasst ist, um den Polarisierungszustand eines integrierten Steuersignals ($R_{11}$; $R_{12}$) der Signalkomponente ($S_{21}$, $S_{22}$) zu bestimmen, welche die Kette durchläuft, wobei die Korrekturvorrichtung ($D_1$; $D_2$) weiter angepasst ist, um die Polarisierung der Signalkomponente ($S_{21}$, $S_{22}$) zu modifizieren, um den Polarisierungszustand auszurichten, der in Bezug auf den mindestens einen Polarisierungszustand der zugeordneten Basis bestimmt wird, wobei jede Behandlungskette ($C_1$; $C_2$) ein Erkennungsmodul (380-1; 380-2) umfasst, das angepasst ist, um das codierte Quantensignal ( $S_{Q1}$ ) gemäß mindestens einem von dem mindestens einen Polarisierungszustand der zugeordneten Basis zu messen.

5. Empfänger (30), nach Anspruch 4, wobei die Korrekturvorrichtung ($D_1$; $D_2$) für jede Behandlungskette ($C_1$; $C_2$) konfiguriert ist, um die Signalkomponente ($S_{21}$, $S_{22}$) zu demultiplexen, um eine der Steuersignalkomponenten ($R_{11}$; $R_{12}$) auszuwählen, und sie einer Polarisierungs-Analysevorrichtung ($DA_1$; $DA_2$) zuzuführen, die mindestens eine Erkennungseinheit (366-x) umfasst und angepasst ist, um die ausgewählte integrierte Steuersignalkomponente ($R_{11}$; $R_{12}$) gemäß mindestens einem von dem mindestens einen Polarisierungszustand der zugeordneten Basis zu erkennen.

**6.** Empfänger (30) nach einem der Ansprüche 4 oder 5, wobei die Korrekturvorrichtung ($D_1$; $D_2$) für jede Behandlungskette ($C_1$; $C_2$) weiter einen Prozessor (368-1; 368-2) umfasst, der konfiguriert ist, um den bestimmten Polarisierungszustand zu analysieren, und um ein Ansteuerungssignal ($S_{C36}$) zu generieren, das auf ein Polarisierungskorrekturmodul (340-1; 340-2) der Signalkomponente ($S_{21}$, $S_{22}$) angewendet wird.

**7.** Empfänger (30) nach einem der Ansprüche 4 bis 6, wobei der Strahltrenner (320) ein symmetrischer optischer Y-Faserkoppler vom Typ 50/50 ist, und wobei die Behandlungsketten ($C_1$; $C_2$) aus Polarisierungshaltefasern (PMF) und/oder optischen Monomode-Fasern (SMF) gebildet sind.

**8.** System (1) zur Quantenverteilung von Verschlüsselungsschlüsseln, umfassend einen Sender (10) nach einem der Ansprüche 1 bis 3 und einen Empfänger (30) nach einem der Ansprüche 4 bis 7.

**9.** System (1), nach Anspruch 8, wobei das multiplexierte Signal ($S_1$) ein frequenzgemultiplextes Signal ist.

**10.** System (1), nach Anspruch 9, und wobei der absolute Wert der Wellenlängendifferenz zwischen dem codierten Quantensignal ($S_{Q1}$) und dem ersten und/oder dem zweiten integrierten Signal ($R_{11}$ und/oder $R_{12}$) größer oder gleich einem ersten Mindestwert einer Wellenlängendifferenz ($\delta\lambda$) ist, und wobei der absolute Wert der Wellenlängendifferenz zwischen dem ersten Steuersignal ($R_{11}$) und dem zweiten Steuersignal ($R_{12}$) größer oder gleich einem zweiten Mindestwert einer Wellenlängendifferenz ($\delta\lambda'$) ist.

**Claims**

**1.** Emitter (10) configured to transmit a multiplexed signal ($S_1$) through a transmission channel (50), where said emitter (10) comprises:

- a signal generator (120) configured to generate an initial quantum signal ($S_{Q0}$), a first reference signal ($R_{01}$) and a second reference signal ($R_{02}$),
- a polarisation encoder (140) comprising a plurality of N optical paths ($B_n$), the polarisation encoder (140) further comprising:

  - an optical selector (142) configured to select one of said optical paths ($B_n$) and to direct the initial quantum signal ($S_{Q0}$) generated towards the selected optical path ($B_n$),

  - an optical recombiner (148) configured to generate said multiplexed signal ($S_1$), the multiplexed signal comprising a first control signal ($R_{11}$) of a first polarisation encoding value ($P_1$), a second control signal ($R_{12}$) of a second polarisation encoding value ($P_2$), and a quantum signal ($S_{Q1}$) encoded on a polarisation encoding value chosen from among a set of values ($\mathcal{P}$) comprising at least said first polarisation encoding value ($P_1$) and said second polarisation encoding value ($P_2$), said encoded quantum signal ($S_{Q1}$) being determined from said initial quantum signal ($S_{Q0}$) delivered through the optical path selected by said optical selector (142),

and in that the optical paths ($B_n$) comprise a first optical path ($B_1$) comprising a first integration unit (144-1) configured to integrate said first reference signal ($R_{01}$) in the first optical path ($B_1$) and a second optical path ($B_2$) comprising a second integration unit (144-2) configured to integrate the second reference signal ($R_{02}$) in the second optical path ($B_2$), said first control signal ($R_{11}$) being determined from the first reference signal ($R_{01}$) delivered by the first optical path ($B_1$) to the optical recombiner (148), and said second control signal ($R_{12}$) being determined from said second reference signal ($R_{02}$) delivered by the second optical path ($B_2$) to the optical recombiner (148).

**2.** Emitter (10), according to claim 1, wherein each optical path ($B_n$) of said polarisation encoder (140) is associated with a polarisation encoding value ($P_n$) of said set of values ($\mathcal{P}$), and wherein at least one of said optical paths ($B_n$) further comprises an optical element (146-n) configured to modify the polarisation of an optical signal travellilng said optical path ($B_n$) according to the associated encoding value ($P_n$).

**3.** Emitter (10), according to any one of claims 1 or 2, wherein said emitter (10) is a guided all-optical device, said optical paths ($B_n$) of said polarisation encoder (140) being formed from polarisation-maintaining fibres (PMF) and/or integrated waveguides.

**4.** Receiver (30) configured to receive a multiplexed signal ($S_1$) through a transmission channel (50), said multiplexed signal ($S_1$) comprising an encoded quantum signal ($S_{Q1}$), a first control signal ($R_{11}$) of a first polarisation encoding value ($P_1$) and a second control signal ($R_{12}$) of a second polarisation encoding value ($P_2$), where said receiver (30) comprises a beam separator (320) configured to separate said multiplexed signal ($S_1$) into two signal components

($S_{21}$ and $S_{22}$) each comprising a component of said first control signal ($R_{11}$) and a component of said second control signal ($R_{12}$), each signal component ($S_{21}$; $S_{22}$) respectively travelling a processing chain ($C_1$; $C_2$) associated with a polarisation base composed of at least one polarisation state ($P_1$; $P_2$), one of said signal components ($S_{21}$ or $S_{22}$) further comprising said encoded quantum signal ($S_{Q1}$),

and in that each processing chain ($C_1$; $C_2$) comprises a correction device ($D_1$; $D_2$) suitable for determining the polarisation state of an integrated control signal ($R_{11}$; $R_{12}$) of said signal component ($S_{21}$, $S_{22}$) travelling said chain, the correction device ($D_1$; $D_2$) being further suitable for modifying the polarisation of said signal component ($S_{21}$, $S_{22}$), so as to align said determined polarisation state with respect to one of said at least one polarisation state of said associated base, each processing chain ($C_1$; $C_2$) comprising a detection module (380-1; 380-2) suitable for measuring said encoded quantum signal ($S_{Q1}$) according to at least one of said at least one polarisation state of said associated base.

5. Receiver (30), according to claim 4, wherein, for each processing chain ($C_1$; $C_2$), said correction device ($D_1$; $D_2$) is configured to demultiplex said signal component ($S_{21}$, $S_{22}$) to select one of said control signal components ($R_{11}$; $R_{12}$) and route it towards a polarisation analysis device ($DA_1$; $DA_2$) comprising at least one detection unit (366-x) and suitable for detecting said control integrated signal selected component ($R_{11}$; $R_{12}$) according to one of said at least one polarisation state of said associated base.

6. Receiver (30), according to any one of claims 4 or 5, wherein, for each processing chain ($C_1$; $C_2$), said correction device ($D_1$; $D_2$) further comprises a processor (368-1; 368-2) configured to analyse said determined polarisation state and to generate a servo signal ($S_{C36}$) applied to a polarisation correction module (340-1; 340-2) of said signal component ($S_{21}$, $S_{22}$).

7. Receiver (30), according to any one of claims 4 to 6, wherein said beam separator (320) is a 50/50 type fibred Y-shaped symmetrical optical coupler, and wherein said processing chains ($C_1$; $C_2$) are formed from polarisation-maintaining fibres (PMF) and/or single-mode optical fibres (SMF).

8. Encryption key quantum distribution system (1) comprising an emitter (10) defined according to any one of claims 1 to 3, and a receiver (30) defined according to any one of claims 4 to 7.

9. System (1), according to claim 8, wherein said multiplexed signal ($S_1$) is a frequentially multiplexed signal.

10. System (1), according to claim 9, and wherein the absolute value of the difference in wavelength between said encoded quantum signal ($S_{Q1}$) and said first and/or said second integrated signal ($R_{11}$ and/or $R_{12}$) is greater than or equal to a first minimum value of difference in wavelength ($\delta\lambda$), and wherein the absolute value of the difference in wavelength between said first control signal ($R_{11}$) and said second control signal ($R_{12}$) is greater than or equal to a second minimum value of difference in wavelength ($\delta\lambda'$).

**Figure 1**

**Figure 2**

**Figure 3**

**Figure 4**

**Figure 5**

**Figure 6**

$R_{01}$

$R_{02}$

$S_{Q0}$

120

122-1

122-0

124

126

122-2

**Figure 7**

**Figure 8**

**Figure 9**

**Figure 10**

EP 4 576 613 B1

**Figure 11**

**Figure 12**

**Figure 13**

Générer le signal quantique initial $S_{Q0}$, le premier signal de référence $R_{01}$, et le deuxième signal de référence $R_{02}$ — **1020**

Diriger le signal quantique initial $S_{Q0}$ vers un des bras optique $B_n$ — **1042**

Insérer le premier signal de référence $R_{01}$ dans le premier bras optique $B_1$, et le deuxième signal de référence $R_{02}$ dans le deuxième bras optique $B_2$ — **1044**

Modifier la polarisation du signal résultant du premier bras optique $B_1$ après insertion du premier signal de référence $R_{01}$ — **1046**

Former le signal multiplexé $S_1$ par multiplexage des signaux résultant issus de l'ensemble des bras optique $B_n$ — **1048**

Transmettre le signal multiplexé $S_1$ à travers un canal de transmission 50 — **1050**

**Figure 14**

Réceptionner le signal multiplexé $S_1$ à travers un canal de transmission 50 — **3000**

Séparer le signal multiplexé $S_1$ en deux composantes de signal $S_{2x}$ se propageant sur une chaine de traitement $C_x$; une des composante comprenant le signal quantique $S_{Q1}$ encodé — **3020**

Modifier la polarisation de la composante de signal $S_{2x}$, pour chaque chaine de traitement $C_x$ — **3040**

Déterminer l'état de polarisation du signal de contrôle $R_{1x}$ de la composante de signal $S_{2x}$, pour chaque chaine de traitement $C_x$ — **3060**

Déterminer l'état de polarisation du signal quantique $S_{Q1}$ issu de la composante de signal $S_{2x}$, pour chaque chaine de traitement $C_x$ — **3080**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8265279 B2

- CN 208433978 U

**Littérature non-brevet citée dans la description**

- **C. BENNETT ET G. BRASSARD**. Quantum cryptography: Public key distribution and coin tossing. *Theoretical Computer Science*, 1884, vol. 560 (1984), 7-11